(19) **Europäisches Patentamt / European Patent Office / Office européen des brevets**

(11) **EP 2 206 122 B1**

(12) **FASCICULE DE BREVET EUROPEEN**

(45) Date de publication et mention de la délivrance du brevet:
**17.09.2014 Bulletin 2014/38**

(21) Numéro de dépôt: **08841019.6**

(22) Date de dépôt: **24.10.2008**

(51) Int Cl.:
*G21C 3/36* (2006.01)

(86) Numéro de dépôt international:
**PCT/EP2008/064421**

(87) Numéro de publication internationale:
**WO 2009/053453 (30.04.2009 Gazette 2009/18)**

(54) **DISPOSITIF DE MAINTIEN DE PLAQUES DE COMBUSTIBLE NUCLEAIRE POUR FAISCEAU FISSILE DE REACTEUR NUCLEAIRE TYPE GFR (GAS FAST REACTOR) A CALOPORTEUR GAZEUX A HAUTE TEMPERATURE**

VORRICHTUNG ZUM FESTHALTEN VON KERNBRENNSTOFFPLATTEN ZUM AUFBAU EINES SPALTBARES MATERIAL ENTHALTENDEN BÜNDELS ZUM EINSATZ IN EINEM KERNREAKTOR VOM TYP GFR (GAS FAST REACTOR) MIT HOCHTEMPERATURGASKÜHLMITTEL

DEVICE FOR HOLDING NUCLEAR FUEL PLATES FOR A FISSILE BUNDLE OF A NUCLEAR REACTOR OF THE GFR TYPE WITH HIGH-TEMPERATURE GASEOUS HEAT-CARRIER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.10.2007 FR 0758625**

(43) Date de publication de la demande:
**14.07.2010 Bulletin 2010/28**

(73) Titulaire: **Commissariat à l'Énergie Atomique et aux Énergies Alternatives 75015 Paris (FR)**

(72) Inventeurs:
• **LORENZO, Denis**
**F-04100 Manosque (FR)**

• **RAVENET, Alain**
**F-83560 Vinon-Sur-Verdon (FR)**
• **GARRIGUE, Romain**
**F-83740 La Cadiere D'Azur (FR)**
• **MAILHE, Guy**
**F-04860 Pierrevert (FR)**

(74) Mandataire: **Ilgart, Jean-Christophe et al BREVALEX 95, rue d'Amsterdam 75378 Paris Cedex 8 (FR)**

(56) Documents cités:
**FR-A- 2 889 765     GB-A- 872 719**
**GB-A- 907 393     GB-A- 1 162 641**
**GB-A- 1 519 546     GB-A- 2 021 844**
**US-A- 3 240 680     US-A- 3 322 645**

## Description

## DOMAINE TECHNIQUE ET ART ANTÉRIEUR

La présente invention se rapporte à un dispositif de maintien d'éléments de combustible nucléaire en forme de plaque pour réacteur nucléaire à flux rapide, plus particulièrement à flux rapide à caloporteur gazeux à haute température de quatrième génération, dénommé réacteur GFR (« Gaz Fast Reactor » en terminologie anglo-saxonne), à un faisceau fissile formé par une pluralité de tels dispositifs de maintien chargés de plaques de combustible nucléaire et à un assemblage monolithique comportant un tel faisceau fissile.

De manière générale, les centrales de production d'énergie à partir des réactions de fission nucléaire utilisent des éléments combustibles dans lesquels se produisent des fissions libérant une puissance calorifique, qui en est extraite par échange thermique avec un fluide caloporteur assurant leur refroidissement.

Dans le cas des plaques de combustibles, celles-ci sont réunies en groupe et disposées parallèlement les unes par rapport aux autres au sein de chaque groupe. Le fluide caloporteur, par exemple de l'hélium, circule entre les plaques assurant l'extraction des calories par échanges thermiques.

Le coeur des réacteurs est constitué par des structures qui présentent plusieurs fonctions.

D'un point de vue thermohydraulique, les structures permettent de garantir le transfert thermique entre les éléments combustibles et le fluide caloporteur dans toutes les situations de fonctionnement, i.e. elles garantissent le positionnement des éléments combustibles et les épaisseurs des couches de fluide caloporteur nécessaires à leur refroidissement, ainsi que l'alimentation des canaux hydrauliques en fluide caloporteur. Pour cela les structures doivent maintenir suffisamment les éléments combustibles pour que les épaisseurs de couches de fluide caloporteur circulant entre les plaques varient peu, et en outre que le positionnement relatif des plaques soit tel qu'une circulation du fluide soit permise de manière homogène sur les faces des plaques.

Par ailleurs, on souhaite que ces structures introduisent un minimum de perte de charge dans l'assemblage, notamment pour permettre l'évacuation de la puissance résiduelle en mode de convection naturelle lors de certaines situations accidentelles.

On entend par « fraction volumique d'un composant » le rapport entre le volume du composant sur le volume du coeur.

D'une point de vue neutronique, on cherche à garantir la stabilité de la géométrie dans l'espace des éléments combustibles, à assurer une densité donnée de remplissage de combustible fissile telle qu'on puisse atteindre une puissance volumique nécessaire au bon fonctionnement et au bon rendement du réacteur et telle que les structures soient les plus «transparentes» possibles aux neutrons afin de ne pas perturber le fonctionnement neutronique du coeur, et ceci quel que soit le mode de fonctionnement du réacteur, en fonctionnement nominal ou en fonctionnement en situation accidentelle. Pour cela, on cherche à diminuer autant que nécessaire la fraction volumique des structures du coeur ainsi que leur coefficient d'absorption et de modération neutronique.

Du point de vue mécanique, ces structures sont destinées à assurer l'architecture mécanique du coeur. Par ailleurs, il est requis que ces structures assurent l'intégrité des éléments combustibles pendant toute leur durée de vie, afin de garantir le bon fonctionnement neutronique du coeur et de ne pas contaminer le circuit primaire.

Par ailleurs, de manière générale, lors du fonctionnement des réacteurs les éléments combustibles, qui sont les éléments chauffants, sont à une température plus élevée que leurs structures de maintien, ce qui conduit à une dilatation thermique différentielle positive des éléments combustibles par rapport à leur structure de maintien.

Dans le cas particulier des réacteurs rapides dans lesquels le coeur n'est pas modéré, pour lesquels on parle de spectre rapide (on parle de spectre thermique dans le cas où le coeur est modéré) il existe un risque de dégradation des éléments combustibles plus important qu'en spectre thermique car le spectre rapide introduit des phénomènes de gonflement différentiel en plus des dilatations différentielles. On entend par gonflement une déformation définitive des matériaux, à l'inverse de la dilatation thermique pour laquelle la déformation est réversible.

Par conséquent, au niveau local, des risques de contraintes d'interaction entre les éléments combustibles et leur structure de maintien sont plus élevés ; et au niveau du coeur en entier, une arcure des assemblages sur une hauteur de coeur peut être importante, alors qu'elle n'était pas significative en spectre thermique.

Ceci peut alors avoir deux conséquences .

- un risque de chargement mécanique des éléments combustibles par les structures de maintien,
- un risque de chargement mécanique entre les éléments assurant l'architecture mécanique du coeur, qui pourrait être transféré aux éléments combustibles.

En outre, le spectre rapide provoque une fragilisation des matériaux sous irradiation du fait notamment de :

- l'augmentation de la température de transition ductile/fragile,
- l'apparition de phases fragiles et de gonflement excessif des matériaux.

Cette fragilisation rend plus difficile l'accommodation des chargements de type déformation imposée, qu'ils se traduisent sous la forme de contraintes internes au sein des matériaux ou sous la forme de contraintes d'interaction entre les pièces.

Par ailleurs, il est souhaitable que ces structures facilitent les opérations de toutes les étapes du cycle du combustible, notamment les opérations de manutention en général, de montage, de démontage, de transport et de retraitement.

Enfin, tous les constituants du coeur de réacteur étant dangereux pour l'environnement, ceux-ci doivent subir des étapes de retraitement. Il est donc souhaitable de favoriser la démontabilité des structures du coeur afin d'optimiser leur durée de vie et ainsi minimiser la quantité de déchets activés.

En outre, il est requis d'atteindre une fraction volumique élevée de combustible, au moins de l'ordre de 20 % afin d'obtenir un spectre rapide, de l'isogénération, voire de la surgénération, un rendement intéressant, une réactivité contrôlable afin de garantir des marges de sécurité suffisantes au pilotage du réacteur et enfin un inventaire de matière fissile acceptable.

Par ailleurs, pour répondre aux objectifs fixés pour les réacteurs de quatrième génération, il apparaît que les coeurs des réacteurs de type GFR, outre le fait qu'ils doivent présenter un flux rapide assurant la possibilité d'atteindre un taux de conversion au moins égal à 1, afin de diminuer considérablement la quantité d'uranium nécessaire par unité d'énergie produite et/ou une capacité à transmuter des déchets (produits de fission et actinides mineurs), doivent également permettre, avec un caloporteur gaz, d'atteindre en sortie de réacteur un niveau de température moyenne suffisamment élevé compatible avec les applications envisagées de production d'électricité à fort rendement (par exemple en cycle direct), de production d'hydrogène, de dessalement de l'eau de mer ou de synthèse de carburant ; ce niveau est fixé à environ 900°C pour une température d'entrée de l'ordre de 400°C, ce qui donne lieu à un gradient thermique axial dans le coeur de 500°C. Ces objectifs de l'utilisation d'un caloporteur gaz, d'une haute température en sortie de coeur et d'un gradient thermique très important dans le coeur pour un réacteur type GFR, conduisent parmi toutes les filières de réacteurs à des conditions de fonctionnement très sévères en matière de dilatations thermiques différentielles locales, qui conduisent à un risque de dégradation des éléments combustibles.

En effet, le caloporteur gaz est peu efficace pour assurer le refroidissement local d'un point chaud par échange conductif, tant à cause de la faible conductivité thermique du gaz, par rapport à l'eau des réacteurs à eau pressurisé ou au sodium des réacteurs à neutrons rapides, que de la vitesse très élevée qui doit lui être appliquée en conséquence pour assurer le refroidissement des éléments combustibles ; de l'ordre d'une centaine de m/s sont nécessaires en gaz, contre seulement une dizaine de m/s dans les réacteurs à neutrons rapides et environ 5 m/s dans les réacteurs à eau pressurisée par exemple.

En outre, le coeur présente globalement de très importants gradients thermiques : on prévoit en effet une élévation axiale moyenne de température le long des plaques de l'ordre de 500°C, contre environ 180°C au maximum pour un réacteur à neutron rapide et seulement 37°C pour un réacteur à eau pressurisée.

Par ailleurs, le gonflement sous irradiation est généralement fonction de la température. Par conséquent, l'existence de forts gradients thermiques locaux risque d'augmenter encore l'importance de ces gonflements différentiels.

Les déformations différentielles sont d'autant plus gênantes dans le cas des réacteurs de type GFR, puisque ceux-ci mettent en oeuvre des matériaux réfractaires adaptés aux hautes températures de ces réacteurs, ces matériaux disposant intrinsèquement d'une ténacité et d'une réserve de ductilité plus faibles que les matériaux métalliques classiquement utilisés en réacteurs, ils sont donc particulièrement sensibles à ces déformations.

Il existe plusieurs types de réacteurs utilisant des éléments combustibles de type plaque, par exemple les réacteurs expérimentaux de type MTR (« Material Testing reactor » en terminologie anglaise), comme par exemple le réacteur Jules Horowitz (RJH). Dans ce réacteur, les plaques sont maintenues sur toute leur hauteur par des liaisons glissières, les plaques faisant toute la hauteur du coeur. Ce type de conception ne peut convenir aux réacteurs de type GFR car l'apparition de dilatation différentielle et de gonflement différentiel provoquerait l'application de contraintes inacceptables sur les plaques.

Il est également connu du document GB 2 021 844 A, une structure de maintien pour des éléments combustibles de type plaque pour un réacteur refroidi par un gaz caloporteur. Cette structure de maintien est constituée d'un caisson hexagonal dans lequel est fixé un élément de séparation central en forme de croisillon, qui s'étend sur toute la hauteur du caisson. Les plaques sont maintenues transversalement dans des gorges ménagées dans les croisillons et les faces internes du caisson hexagonal. Les plaques ne font pas toute la hauteur du coeur mais sont empilées les unes sur les autres, la plaque inférieure reposant sur une butée ménagée à la base de chaque gorge. La structure de maintien des plaques est particulièrement rigide, puisqu'elle est constituée d'un caisson épais totalement cloisonné et d'inertie importante, et offrant une rigidité sur toute sa hauteur par le croisillon central.

Ce type de structure ne peut également pas convenir dans le cas d'un réacteur de type GFR, puisqu'il ne permet pas de tenir compte du gonflement et de la dilatation des constituants de la structure. En effet, une déformation des plaques de combustible serait contrariée par les glissières, qui appliqueraient une contrainte pouvant être dommageables aux plaques. En outre du fait de l'empilement des plaques sur toute la hauteur du coeur, une immobilisation d'une plaque dans ses glissières du fait d'un gonflement bloquerait alors les déformations axiales des autres plaques : on obtiendrait dans ces conditions un chargement de type déformation imposée des éléments combustibles, qui conduirait rapidement à leur ruine.

Par ailleurs, la manipulation de cette structure n'est pas aisée, en effet elle ne permet pas une séparation par modules des plaques, seule une manipulation individuelle des plaques est possible.

Le document GB 1 162 641 décrit également un assemblage des éléments combustibles de type plaque. L'assemblage est constitué d'un boîtier hexagonal pourvu de trois cloisons centrales formant un croisillon, dans lequel les plaques sont directement intégrées. Les plaques font toute la hauteur du faisceau fissile, elles sont soudées en bas du faisceau et leur espacement en haut du faisceau est assuré par un système de peigne leur permettant une libre dilatation axiale. Les bords latéraux des plaques sont en contact avec les parois intérieures du boîtier sur toute leur hauteur. Le contact latéral avec le boîtier et ses cloisons internes ne permet pas de déformation différentielle transversale entre le boîtier et les plaques, et le soudage des plaques à leur extrémité inférieure ne leur autorise aucune arcure. Ces conditions de contact transversal des plaques sur toute la hauteur du boîtier conduiraient par ailleurs à un chargement des plaques en cas d'arcure du boîtier.

Le document GB 907 393 décrit un système de maintien de plaques combustibles pour un réacteur à flux rapide. Les plaques sont disposées dans un caisson à section rectangulaire et font toute la hauteur du caisson. Celles-ci sont maintenues au niveau d'une zone supérieure et d'une zone inférieure par des crémaillères latérales avec un jeu fonctionnel mécanique devant permettre leur libre arcure sous l'effet du gonflement du combustible. Les plaques de combustible sont solidaires entre elles, par conséquent une déformation d'une des plaques a donc des conséquences sur les plaques voisines. Par ailleurs, le système de maintien est rigide, les plaques peuvent donc subir également des contraintes lors de leur gonflement et/ou dilatation.

Un autre dispositif de maintien de plaques de combustible nucléaire est connu du document GB 1 519 546 A. Ce dispositif comporte un fond, un couvercle et une pluralité de moyens de maintien inférieurs des plaques, fixés au fond, assurant un maintien élastique de ces plaques.

C'est par conséquent un but de la présente invention d'offrir un assemblage de combustible nucléaire pour réacteur rapide, dans lequel les plaques de combustible nucléaire peuvent se déformer, ainsi que les autres éléments constituant l'assemblage sans se détériorer par interaction entre les plaques et les différents éléments, tout en respectant une fraction volumique très élevée de matière combustible dans le coeur, avantageusement au moins 20 %.

## EXPOSÉ DE L'INVENTION

Les buts précédemment énoncés sont atteints par un assemblage comportant un boîtier entourant une structure formant une cage, dans laquelle sont réparties des plaques en étages, les plaques sont disposées par groupe parallèlement les unes aux autres, et ne sont maintenues que par leur extrémités inférieure et supérieure dans la direction de leur largeur. Ainsi les plaques parallèles entre elles sont mécaniquement indépendantes et n'ont pas d'influence les unes sur les autres. Par ailleurs, grâce à l'invention il n'y a aucune interaction mécanique entre les plaques de deux étages distincts. Par ailleurs, la cage et le boîtier sont dissociés, ainsi les déformations du boîtier/de la cage respectivement n'ont pas d'influence sur la cage/le boîtier respectivement. En outre, la cage est telle que les plaques n'entrent également pas en contact avec le boîtier. Ainsi les déformations par dilatation et/ou gonflement de chaque pièce de l'assemblage peuvent se faire librement, sans contraintes d'interaction significatives.

En d'autres termes, la présente invention assure le découplage mécanique entre les éléments combustibles et les structures de maintien, mais également le découplage entre les éléments combustibles eux-mêmes. En outre, elle assure le découplage entre les structures de maintien et la structure du coeur.

L'invention met alors en oeuvre des liaisons de type isostatiques entre chaque élément combustible et sa structure de maintien afin d'éviter l'apparition de contraintes d'interaction pouvant conduire à la ruine des éléments combustibles. Par liaison de type isostatique, nous entendons l'absence de surabondance des liaisons entre les structures et les éléments combustibles, et la présence de jeux fonctionnels mécaniques et/ou des raideurs élastiques de maintien pour les liaisons existantes, afin de permettre une libre déformation des éléments combustibles dans leur structure de maintien.

Selon l'invention, il est donc notamment prévu que l'assemblage comporte plusieurs étages de plaques mécaniquement indépendants.

On prévoit notamment de réaliser une structure de maintien relativement souple apte à éviter que les structures de maintien n'appliquent des contraintes significatives aux plaques de combustible en cas de déformations différentielles plus importantes que prévues. En outre, la structure réalise un maintien axial des plaques, qui est moins encombrant qu'un maintien transverse. Cette réduction de l'encombrement permet de limiter la diminution de la fraction volumique de combustible dans le coeur et d'éviter des volumes morts hydrauliques trop significatifs.

L'invention permet donc d'éviter une interaction mécanique entre les faces des plaques combustibles, de dissocier et découpler mécaniquement les structures assurant le maintien des éléments combustibles de celles assurant l'architecture mécanique du coeur, et d'atteindre une fraction volumique élevée.

La présente invention a alors principalement pour objet un dispositif de maintien de plaques de combustible nucléaire d'axe longitudinal comportant un fond formant une extrémité longitudinale inférieure du dispositif de maintien et un couvercle formant une extrémité longitudinale supérieure du dispositif de maintien, le fond et le couvercle étant reliés l'un à l'autre par un moyen de liaison central et des moyens de liaison périphériques, une pluralité de moyens de maintien supérieurs des plaques fixés au couvercle, une pluralité des moyens de maintien inférieurs des plaques fixés au fond, chaque moyen de maintien supérieur assurant un maintien élastique d'une extrémité longitudinale supérieure d'une plaque dans une direction de la largeur de la plaque et permettant une libre déformation de l'extrémité longitudinale supérieure de la plaque dans une direction de l'épaisseur de la plaque, et chaque moyen de maintien inférieur assurant un maintien élastique d'une extrémité longitudinale inférieure d'une plaque dans une direction de la largeur de la plaque et permettant un mouvement de l'extrémité longitudinale inférieure de la plaque dans la direction de l'épaisseur de la plaque.

Dans un mode de réalisation particulièrement avantageux, chaque moyen de maintien supérieur comporte un peigne supérieur muni d'une pluralité de dents alignées, en saillie longitudinalement en direction du fond, une parmi lesdites dents étant apte à exercer un effort élastique selon la direction de la largeur de la plaque, et chaque moyen de maintien inférieur comporte un peigne inférieur muni d'une pluralité de dents alignées, en saillie longitudinalement en direction du couvercle, une parmi lesdites dents étant apte à exercer un effort élastique selon la direction de la largeur de la plaque. Ces moyens de maintien sont de réalisation très simple et très peu encombrante, par conséquent le coût de revient est réduit, l'encombrement également. Par ailleurs, ces moyens de maintien participent à une diminution de la fraction volumique du dispositif de maintien.

Les dents offrant le maintien élastique assurent un maintien et une référence de positionnement selon la largeur de la dent, et les autres dents assurent un maintien transversal tout en assurant une liberté de déformation transversale, i.e. une capacité d'accommodation de l'arcure transversale de la plaque ainsi que des déformations différentielles avec la plaque.

De manière avantageuse, les dents aptes à exercer un effort élastique selon la direction de la largeur de la plaque sont disposées à une extrémité axiale des peignes inférieur et supérieur disposée vers une partie centrale du fond et du couvercle respectivement, ce qui permet de garantir le respect de la largeur de la couche de gaz circulant entre une extrémité d'une première plaque et la face d'une deuxième plaque inclinée par rapport à la première plaque.

Par exemple, les dents aptes à exercer un effort élastique selon la direction de la largeur de la plaque comportent au moins une languette recourbée déformable élastiquement d'un seul tenant avec la dent. Cette réalisation présente l'avantage d'être simple et robuste.

Le dispositif de maintien peut avoir une section transversale ayant la forme d'un hexagone régulier, les moyens de maintien supérieurs et inférieurs étant répartis en trois zones en forme de losange, un losange du fond étant en vis-à-vis d'un losange du couvercle. Cette forme permet d'assurer la fonction d'architecture mécanique d'un réacteur à flux rapide présentant des boîtiers hexagonaux.

Les peignes inférieurs d'une même zone peuvent alors être disposés parallèles à deux côtés du losange et sont séparés d'une distance donnée, et tous les peignes supérieurs d'une même zone sont disposés parallèles à deux côtés et sont séparés de ladite distance donnée.

Le dispositif de maintien peut comporter trois tirants longitudinaux fixés sur la périphérie du fond et du couvercle, reliant le fond et le couvercle. Ces tirants maintiennent le fond et le couvercle sensiblement parallèles et évitent l'apparition d'un désalignement trop important entre le fond et le couvercle tout en participant à une structure de faible volume et de masse réduite.

Le dispositif de maintien peut également comporter une poutre centrale interposée entre le fond et le couvercle, ladite poutre comportant un passage longitudinal traversant, cette poutre formant un support pour les dispositifs de maintien supérieurs. Cette poutre a avantageusement une forme hexagonale, assurant une distance constante entre cette poutre centrale et les bords de plaques pour limiter les volumes morts aérauliques et garantit la tolérance géométrique de positionnement angulaire du couvercle par rapport au socle.

Le dispositif de maintien selon l'invention comporte également de manière avantageuse des moyens d'orientation d'un dispositif de maintien supérieur dont un fond est destiné à reposer sur le couvercle de manière à aligner les plaques disposées dans le dispositif de maintien avec celles disposées dans le dispositif de maintien supérieur, l'orientation relatif permettant d'aligner les plaques sur toute la hauteur de l'empilement et d'obtenir une circulation du gaz entre les plaques améliorée grâce à des canaux inter-plaques de circulation du gaz continu et de section sensiblement constante.

Ces moyens d'orientation peuvent comporter des plaquettes fixées sur une périphérie du couvercle et faisant saillie longitudinalement en éloignement du fond de façon à délimiter un périmètre de forme hexagonale. Elles sont de réalisation très simple et forment également des moyens de contact privilégiés avec le boîtier de l'assemblage.

Les plaquettes sont par exemple fixées sur les tirants longitudinaux.

Les dispositifs de maintien constituent un moyen de manutention privilégié des plaques de combustible pour toutes les étapes du cycle du combustible (montage, manutention, transport, stockage, retraitement) et permettent de minimiser la quantité de déchets activés.

La présente invention a également pour objet un faisceau fissile comportant au moins un premier et un deuxième dispositif de maintien selon la présente invention, et des plaques de combustibles nucléaires chargées dans lesdits premier et deuxième dispositifs de maintien, le deuxième dispositif de maintien étant empilé sur le premier dispositif de maintien, le fond du deuxième dispositif de maintien reposant sur le couvercle du premier dispositif de maintien.

Les plaques comportent alors avantageusement des cavités axiales au niveau de leurs extrémités longitudinales de forme correspondante à celle des dents. Grâce à la segmentation du faisceau fissile, il est possible d'accommoder l'arcure du boîtier grâce au fléchissement relatif des dispositifs de maintien les uns par rapport aux autres.

Le faisceau fissile selon l'invention comporte avantageusement un socle sur lequel repose le fond du premier dispositif de maintien et un tirant central fixé dans une zone centrale du socle et traversant longitudinalement les poutres centrales et une butée supérieure fixée au tirant central. Ainsi le faisceau fissile peut être facilement manutentionné. En outre, le tirant central permet d'éviter la délocalisation des paniers grâce à la butée supérieure fixée en haut du tirant.

Le faisceau fissile comporte avantageusement des moyens d'orientation d'un dispositif de maintien inférieur dont le fond repose sur le socle, ces moyens d'orientation comportant des plaquettes fixées sur une périphérie du socle et faisant saillie longitudinalement en direction du fond de façon à délimiter un périmètre de forme hexagonale. Le dimensionnement de ces plaquettes détermine également la capacité de fléchissement du dispositif de maintien inférieur par rapport au socle.

Les plaques comportent avantageusement des cavités axiales au niveau de leurs extrémités longitudinales de forme correspondante à celle des dents, la profondeur des cavités étant supérieure à la dimension longitudinale des dents et la largeur de cavité étant supérieure à celle des dents.

Les plaques peuvent par exemple comporter un premier panneau, un réseau d'une pluralité de parois solidarisé au premier panneau pour former des alvéoles séparées, et au moins une pastille de combustible nucléaire s'étendant le long d'un axe entre deux faces opposées, dans lequel la pastille est localisée dans une alvéole avec un jeu radial entre ses parois et la pastille, l'axe de la pastille étant sensiblement parallèle aux parois de l'alvéole.

Les plaques peuvent comporter un deuxième panneau plan solidarisé au réseau, parallèle et opposée au premier panneau, pour fermer les alvéoles, ou un deuxième panneau comprenant un réseau saillant complémentaire du réseau du premier panneau et solidarisé au réseau de la première plaque pour fermer les alvéoles.

Le réseau est avantageusement une structure en nid d'abeilles d'alvéoles hexagonales.

La présente invention a également pour objet un assemblage de coeur de combustible nucléaire pour réacteur nucléaire rapide haute température à caloporteur gaz comportant notamment un faisceau fissile selon la présente invention et un boîtier d'axe longitudinal et de section hexagonale monté autour du faisceau fissile.

Un jeu est prévu entre le boîtier et le faisceau fissile, ce jeu étant plus faible au niveau des plaquettes fixées en périphérie des dispositifs de maintien et des plaquettes fixées en périphérie du socle, ce qui permet d'éviter des interactions mécaniques entre les plaques et le boîtier en cas de déformation des plaques et/ou du boîtier.

En outre, il est prévu pour les réacteurs rapides de Génération IV, d'introduire les actinides mineurs produits par le parc actuel de réacteurs dans le combustible pour optimiser leur recyclage. Grâce à l'invention, les unités d'éléments combustibles étant facilement manutentionnables, la manutention des éléments combustibles peut alors être réalisée dans des conditions de cellule blindée pour toutes les étapes du cycle du combustible (montage et démontage des assemblages, transport, retraitement).

## BRÈVE DESCRIPTION DES DESSINS

La présente invention sera mieux comprise à l'aide de la description qui va suivre et des dessins en annexes sur lesquels :

- la figure 1 est une vue de trois quart d'un dispositif de maintien de plaques de combustible selon la présente invention,
- la figure 2 est une vue de trois quart du dispositif de maintien de la figure 1 partiellement rempli de plaques,
- la figure 3 est une vue de trois quart du dispositif de maintien de la figure 1 complètement rempli de plaques, et positionné sur le socle du faisceau fissile,
- la figure 4A est une vue en coupe longitudinale d'une plaque de combustible particulièrement adaptée au dispositif de maintien de la présente invention,
- la figure 4B est une vue extérieure d'une extrémité longitudinale de la plaque de la figure 4A,
- la figure 4C est une vue en perspective en éclaté du concept de la plaque de combustible de la figure 4A,
- la figure 5 est une vue de détail du dispositif de maintien au niveau d'une interface avec une extrémité inférieure d'une plaque,
- la figure 6 est une vue en coupe longitudinale d'une extrémité inférieure d'une plaque et d'une extrémité supérieure d'une autre plaque montées dans un dispositif de maintien selon l'invention,
- la figure 7 est une vue de détail d'une extrémité latérale d'un dispositif de maintien selon l'invention,
- la figure 8 est une vue d'un assemblage selon l'invention, le boîtier étant partiellement décalé axialement,
- les figures 9A et 9B sont des représentations schématiques d'un fléchissement simulé entre deux dispositifs de maintien d'un faisceau fissile selon la présente invention,

- la figure 10 est une vue de détail de la partie supérieur d'un faisceau fissile selon l'invention.

## EXPOSÉ DÉTAILLÉ DE MODES DE RÉALISATION PARTICULIERS

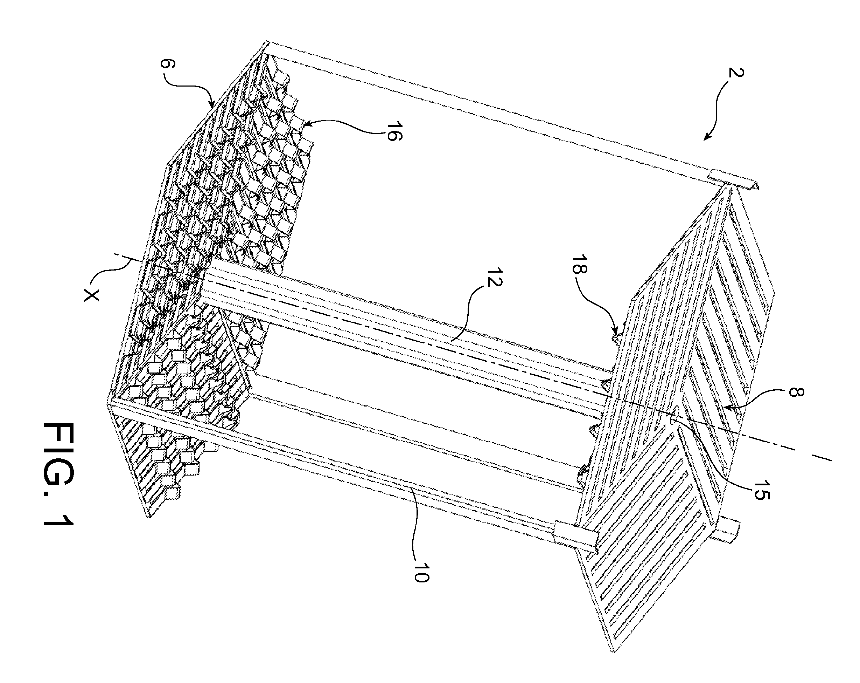

Sur la figure 1, on peut voir une vue en perspective de trois quart d'un dispositif de maintien de plaques de combustible nucléaire selon la présente invention destiné à faire partie d'un assemblage monolithique formant le coeur d'un réacteur nucléaire à flux rapide, en particulier à flux rapide à caloporteur gaz à haute température.

La description qui va suivre est faite en considérant un réacteur à caloporteur gaz, par conséquent le terme « aéraulique » est utilisé pour qualifier les propriétés d'écoulement de l'invention et les éléments de l'invention voyant l'écoulement du gaz, notamment les canaux délimités par les plaques sont désignés canaux aérauliques.

Cependant la présente invention s'applique également aux réacteurs à refroidissement par fluide hydraulique, par exemple par refroidissement au sodium, qui ne seront pas décrits en détail. Dans ces cas le terme approprié serait « hydraulique » pour qualifier notamment les canaux.

Pour rappel, un assemblage de combustible nucléaire comporte notamment un boîtier extérieur formant les parois extérieures de l'assemblage et une structure intérieure supportant les plaques de combustible nucléaire, appelée également faisceau fissile.

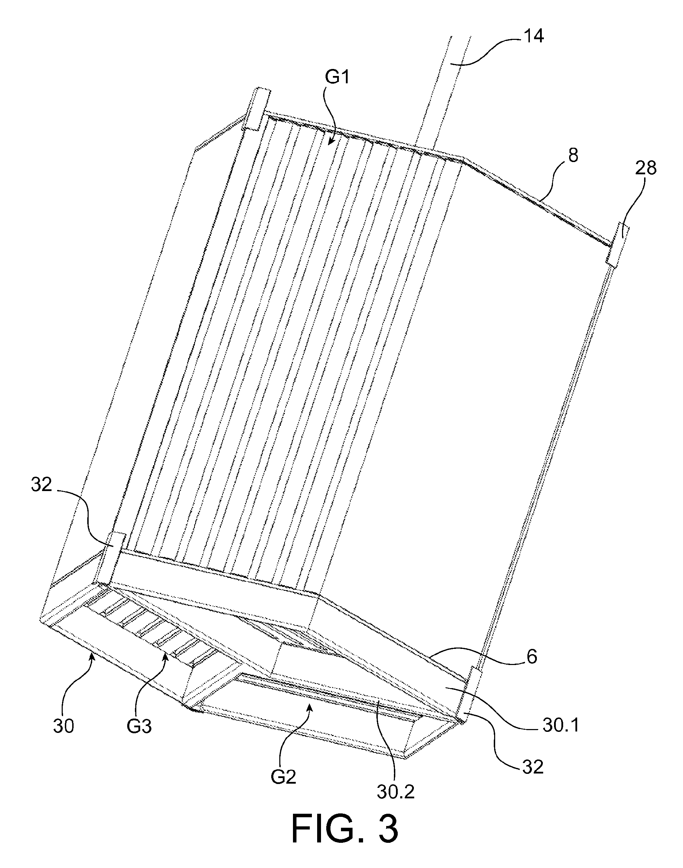

Selon la présente invention, le faisceau fissile est formé par une superposition de plusieurs dispositifs de maintien 2 chargés de plaques de combustible nucléaire 4 représentées sur la figure 3. Les plaques de combustible nucléaire seront désignées dans la suite de la description par plaques 4.

Le dispositif de maintien 2 ou panier a une forme générale hexagonale d'axe longitudinal X, comportant un fond 6 en forme d'hexagone régulier formant une extrémité inférieure du panier et un couvercle 8 en forme d'hexagone régulier formant une extrémité supérieure du panier. Le fond 6 et le couvercle 8 sont reliés par des tirants externes 10 parallèles à l'axe X et s'étendant entre un sommet du couvercle 8 et un sommet du fond 6.

Les tirants sont avantageusement répartis de manière régulière à la périphérie du fond et du couvercle afin de réaliser une connexion équilibrée entre le fond et le couvercle. Dans l'exemple représenté, les tirants externes 10 sont au nombre de trois, les tirants sont répartis de manière à assurer une répartition équilibrée des efforts avec un encombrement limité.

Les tirants sont formés par des tiges à fort élancement.

L'élancement est défini dans la présente demande par le rapport de la longueur de la pièce sur l'épaisseur de la section.

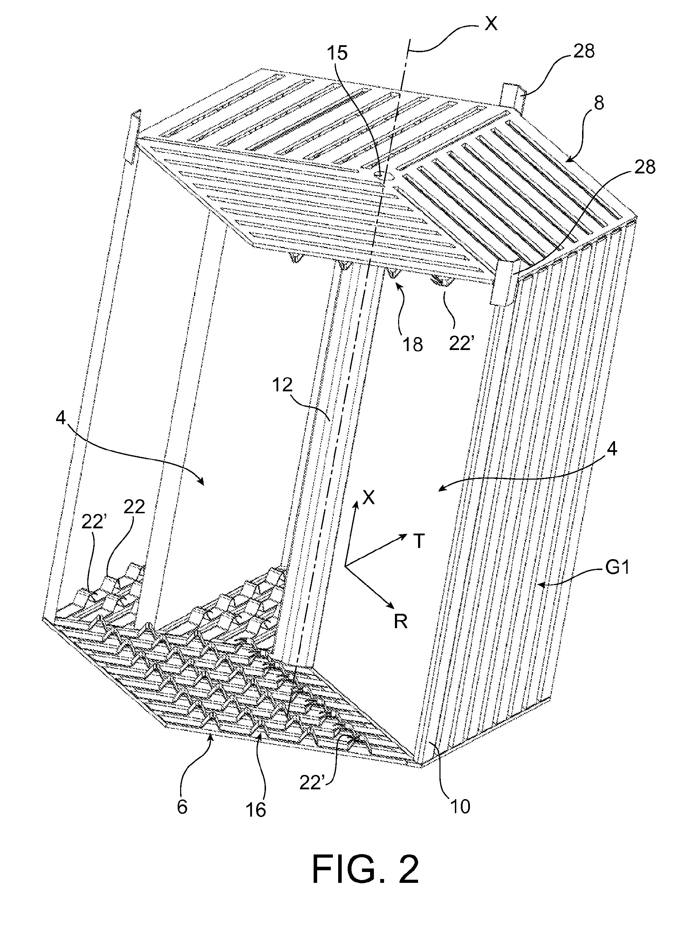

Nous allons définir les directions utilisées dans la suite de la description à l'aide de la figure 2.

La direction radiale R d'une plaque est définie par la largeur de la plaque ; et la direction transversale T est définie par l'épaisseur de la plaque et orthogonale aux directions axiale et radiale.

Le panier comporte également une poutre centrale 12 reliant le centre du fond 6 au centre du couvercle 8. Cette poutre 12 est creuse et est traversée par un tirant central 14 qui sera décrit par la suite. Pour cela, le fond 6 et le couvercle 8 comportent une ouverture centrale 15 pour le passage de ce tirant central 14.

Par exemple, la poutre centrale 12 est encastrée dans des bossages hexagonaux ménagés dans les parties centrales du fond 6 et du couvercle 8.

Cette poutre 12 rigidifie le panier dans la direction axiale, lui permettant de supporter les paniers supérieurs, et fixe la distance entre le fond et le couvercle, évitant l'application de contrainte selon l'axe X aux plaques 4.

En outre, elle permet de garantir les tolérances géométriques du panier, notamment la coaxialité du fond et du couvercle, leur parallélisme, et leur positionnement angulaire relatif.

Cette poutre permet également de supprimer le volume mort central qui est consommateur de fluide caloporteur ne participant pas au refroidissement des plaques.

Le fond 6 et le couvercle 8 comportent respectivement des moyens 16, 18 pour maintenir les plaques 4.

Les plaques sont définies par leur longueur s'étendant selon la direction axiale, leur largeur s'étendant selon la direction radiale et leur épaisseur s'étendant selon la direction transverse.

Les plaques sont des hexaèdres, avantageusement des parallélépipèdes rectangles.

Les faces de plus grandes surfaces peuvent avoir différentes formes. Celles-ci peuvent être des parallélogrammes, par exemple sensiblement rectangles, des trapèzes isocèles ou non, des trapèzes rectangles.

Les autres faces des plaques peuvent également avoir ces formes.

De manière générale les angles du parallélépipède sont avantageusement proches de 90° et ne s'écartent de cette valeur qu'au plus de quelques degrés, par exemple les angles sont compris entre [85°, 105°].

La distance séparant le fond 6 et le couvercle 8, plus particulièrement entre les moyens 16 et 18 maintenant une même plaque, est supérieure à la longueur d'un plaque, cette distance est choisie de telle sorte qu'elle assure des jeux axiaux permettant une libre déformation des plaques sans aucun risque de délogement. Un exemple numérique sera donné dans la suite de la description.

Selon l'invention, ces moyens 16, 18 maintiennent les plaques uniquement selon la direction radiale et autorisent un faible déplacement selon la direction transverse, le jeu est de l'ordre du dixième de millimètre.

Les plaques disposées dans le panier sont réparties en trois groupes G1, G2, G3, dans lesquels les plaques 4 sont toutes parallèles entre elles, les plaques de deux groupes formant entre elles un angle de 60°. Nous décrirons en particulier le groupe de plaques G1, mais la description s'appliquent également aux autres groupes G2 et G3.

Les moyens de maintien 16 du fond sont identiques à ceux 18 du couvercle, nous nous limiterons donc à la description des moyens 16.

Chaque plaque 4 est maintenue par des moyens 16 indépendants des moyens de maintien des autres plaques, ceux-ci étant tous identiques, nous nous limiterons aux moyens de maintien 16 d'une seule plaque.

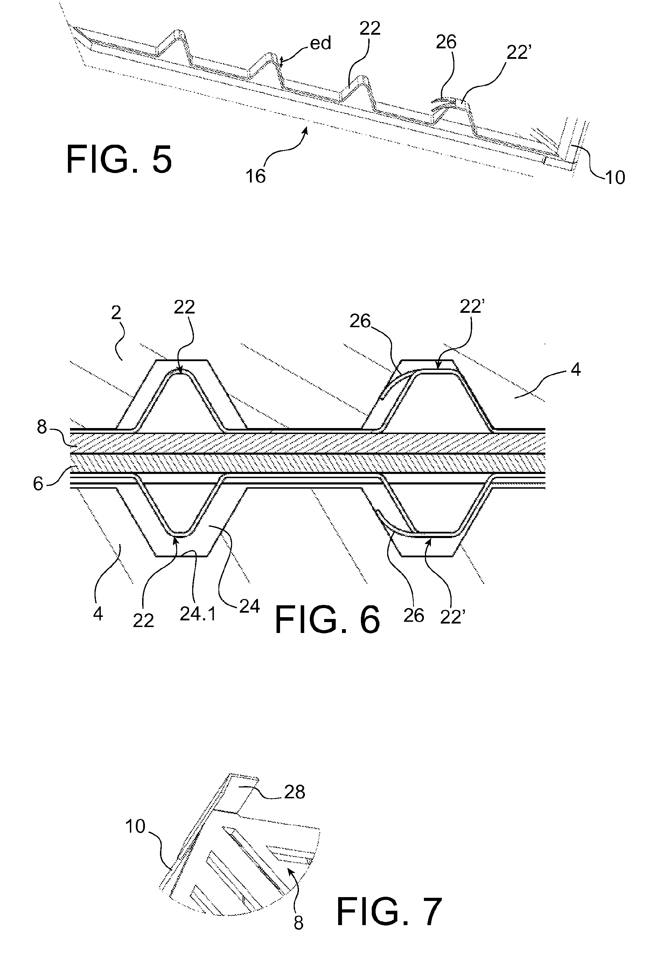

Les moyens de maintien 16, visibles sur la figure 5, comportent un peigne muni de dents 22 destinées à pénétrer dans des évidements 24 formés dans une extrémité axiale 4.1 d'une plaque 4. Les dents 22 ont un profil général triangulaire et ont une largeur donnée $e_d$. Les évidements 24 sont définis par un fond 24.1 dont le profil est complémentaire à celui des dents et des parois latérales 24.2, la distance séparant les faces internes des parois 24.2 étant supérieure à l'épaisseur $e_d$. La hauteur des dents 22 est inférieure à la profondeur des évidements 24 comme on peut le voir sur la figure 6.

Dans l'exemple représenté, le peigne comporte cinq dents, mais on pourrait prévoir deux ou trois dents ou plus de quatre dents en fonction de la largeur des plaques.

Le peigne comporte également des moyens destinés à immobiliser la plaque 4 selon la direction du peigne.

Ces moyens sont formés par deux languettes 26 solidaires d'une dent 22' et destinés à venir en appui sur l'un des côtés du fond 24.1 de l'évidement 24. La déformation élastique de ces languettes provoque le plaquage sur l'autre côté du fond de la dent, immobilisant la plaque 4 selon la direction radiale. La raideur élastique des bossages formés par les languettes maintiennent alors la plaque 4 contre la face de référence de la dent.

De manière avantageuse, la dent 22' est la dent la plus à l'intérieur du peigne, ce qui permet de garantir l'épaisseur de la lame de gaz circulant le long de la face de la plaque de l'autre groupe, située en vis-à-vis de l'extrémité de plaque 4 maintenue par la dent 22'.

Les autres dents assurent comme écrit précédemment le maintien transversal de la plaque, i.e. selon la direction de l'épaisseur. Pour cela, un jeu mécanique fonctionnel transverse est ménagé entre les évidements 24 et les dents 22 pour garantir la libre déformation des plaques suivant leur épaisseur sans affecter la fraction volumique de combustible dans le coeur. Le degré de liberté transverse apporté par ce jeu n'est pas non plus susceptible d'altérer notablement la qualité de refroidissement des plaques, puisque ce jeu transverse est de l'ordre du dixième de millimètres pour une distance entre plaques de 4 mm.

On peut noter que l'on pourrait prévoir, dans un autre mode de réalisation, de ménager un jeu transverse plus important pour les deux dents centrales, ce qui permettrait avantageusement d'obtenir un degré de liberté plus important pour une éventuelle arcure des plaques dans la direction de la largeur, tout en garantissant le maintien transverse des plaques en cas de dégradation d'une des deux liaisons principales. En effet, en cas d'arcure des plaques autour de la direction axiale, le déplacement de la plaque (dans la direction transverse) sera maximal au niveau des deux dents centrales ; en augmentant le jeu transverse au niveau de ces deux dents par rapport aux deux dents externes, on augmente la capacité d'arcure tout en garantissant une référence de positionnement transverse. En outre, si une des deux dents externes est dégradée, le maintien transverse de la plaque est assuré grâce aux dents centrales.

De manière avantageuse, le maintien de la plaque dans la direction du peigne par une seule dent permet de n'avoir qu'une seule face de référence, au niveau de la dent munie des languettes élastiques, cette face de référence étant cette opposée à celle munie des languettes. Ceci permet de garantir le positionnement de la plaque avec la tolérance la plus serrée possible.

Les peignes assurent donc le maintien et la référence de positionnement des plaques sans leur appliquer de contraintes d'interaction.

Dans le cas où le peigne est réalisé en matériau métallique, celui est réalisé, par exemple par pliage ou emboutissage d'une bande de tôle et les languettes 26 sont obtenues pas découpage de la bande au niveau d'une dent et déformation des languettes afin d'avoir une courbure convexe.

On pourrait prévoir de ne réaliser qu'une seule languette de rigidité suffisante pour exercer un effort apte à maintenir radialement la plaque.

Dans le cas où les peignes sont réalisés en matériaux métalliques, les peignes 16, 18 sont ensuite soudés, par exemple au laser ou sertis sur le fond et le couvercle.

Chaque plaque 4 est donc maintenue entre un peigne supérieur fixé au couvercle 8 et un peigne inférieure fixé au fond 6.

Les tirants externes 10 garantissent le bon maintien des plaques combustibles dans les dents des peignes, car ils évitent d'avoir un désalignement trop important entre fond 6 et le couvercle 8 assemblés dans le panier. Le fond 6 et le couvercle 8 sont en effet des pièces fines, qui pourraient présenter des défauts de planéité notables après fabrication et subir des déformations significatives sous le chargement des plaques. En outre, les tirants permettent la manutention du panier en assurant la liaison entre le fond et le couvercle.

Le panier selon la présente invention forme donc une structure souple de type cage assurant le maintien individuel des plaques 4 de manière axiale par le fond 6 et le couvercle 8 reliés par les tirants externes 10. Les plaques 4 sont alors supportées sans que leur soient appliquées des contraintes d'interaction. En effet, ce maintien permet une déformation axiale libre et une arcure radiale libre. Grâce à l'invention, on obtient donc un découplage mécanique des plaques 4 entre elles et avec le panier.

Par ailleurs, le panier selon l'invention forme un moyen de chargement aisé des plaques en vue de former le faisceau fissile.

Par ailleurs, les plaques peuvent être manipulées dans leur panier de maintien pour plusieurs étapes du cycle du combustible : transport, montage dans le faisceau fissile et démontage du faisceau fissile, retraitement.

Les paniers selon l'invention chargés de plaques sont destinés à être empilés.

Chaque panier comporte dans l'exemple représenté trois plaquettes 28 fixées chacune à un sommet du couvercle, dont une est visible sur la figure 7. Les trois sommets étant séparés d'un angle de 120°, faisant saillie axialement vers le haut. Ces plaquettes sont pliées de manière à se plaquer contre les deux côtés de l'hexagone définis par le couvercle. Les saillies des plaquettes prolongent donc l'hexagone formé par le couvercle.

Dans l'exemple représenté, les plaquettes 28 sont avantageusement fixées aux tirants externes 10. Les tirants forment alors une butée pour les plaquettes en condition de fléchissement relatif des dispositifs de maintien. En effet, si les plaquettes étaient positionnées au niveau des trois coins sans tirants, ce sont les plaques combustibles qui constitueraient la butée, ce qui serait dommageable pour l'intégrité mécaniques des plaques. Par ailleurs, la fixation au niveau des montants est facilitée, ceux-ci formant une surface de fixation.

Ces plaquettes assurent le positionnement relatif des paniers les uns par rapport aux autres. Ce maintien du positionnement relatif assure la continuité des canaux définis entre les plaques à travers lesquels le gaz caloporteur circule, tout en permettant leur fléchissement des paniers les uns par rapport aux autres afin de pouvoir accommoder l'arcure du boîtier.

En outre, ces plaquettes 28 forment des entretoises interposées entre le panier et la face intérieure du boîtier, celles-ci empêchent les contacts directs entre les plaques et le boîtier, et fixent une épaisseur de couche aéraulique entre les plaques externes et le boîtier.

Les paniers assurent une répartition des jeux mécaniques fonctionnels autour des plaques permettant un découplage mécanique des plaques combustibles des structures du coeur.

Nous allons maintenant décrire la réalisation d'un faisceau fissile selon l'invention.

Celui-ci est formé d'un empilement de paniers 2 selon l'invention, les paniers étant chargés de plaques 4.

Le faisceau fissile comporte un socle 30 de forme hexagonale correspondante, ce socle comporte un cadre 30.1 hexagonal et de traverses 30.2 dessinant les trois emplacements des groupes de plaques. Le socle 30 comporte également des plaquettes 32 similaires aux plaquettes 28 des paniers 2, ces plaquettes comme pour les paniers permettent d'assurer le positionnement correct du premier panier 2 sur socle 30.

Le socle 30 comporte également un tirant central 14 fixé au point de convergence des trois traverses 30.2 et s'étendant axialement, celui-ci est destiné à traverser tous les paniers comme nous le verrons par la suite.

Le premier panier de l'empilement forme la base de l'empilement, celui-ci est déposé sur le socle, le tirant central 14 traversant la poutre centrale 12.

Le panier suivant est ensuite disposé entre les plaquettes 28, les poutres centrales 12 des deux paniers sont alors alignées, permettant le passage du tirant central 14. Les plaques sont également alignées axialement par groupe, formant ainsi des canaux continus entre les plaques sur deux hauteurs de paniers.

Le troisième panier chargé de plaques est ensuite empilé sur le deuxième panier comme précédemment, et ainsi de suite, jusqu'à atteindre le nombre requis de plaques 4.

L'empilement comporte alors un passage central défini par l'alignement des poutres creuses et traversé par le tirant central et des canaux continus entre les plaques.

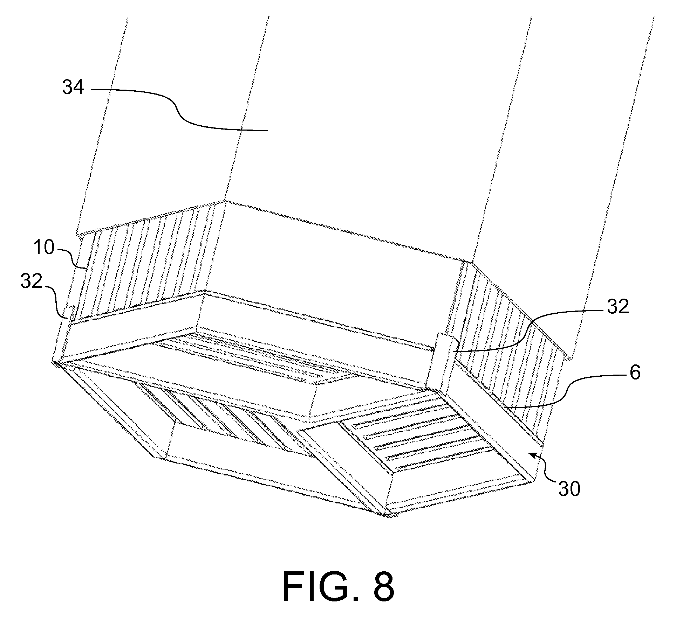

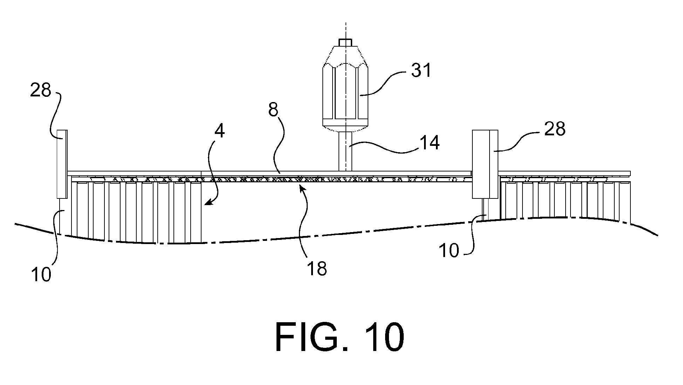

Le tirant central 14 comporte une butée supérieure 31 particulièrement visible sur la figure 10. Cette butée 31 est destinée à éviter la délocalisation des paniers en fonctionnement, mais également lors de toute étape de manutention du combustible. Par ailleurs, il permet une manutention facilitée du faisceau fissile pour son montage dans le boîtier hexagonal. Sur la figure 8, le boîtier 34 est partiellement mis en place sur l'empilement des paniers.

Le socle 30 permet également la fixation du faisceau fissile dans le boîtier hexagonal.

Nous allons maintenant décrire un exemple de plaque de combustible nucléaire 4 particulièrement adaptée à la présente invention, décrit dans le document FR 2 889 765.

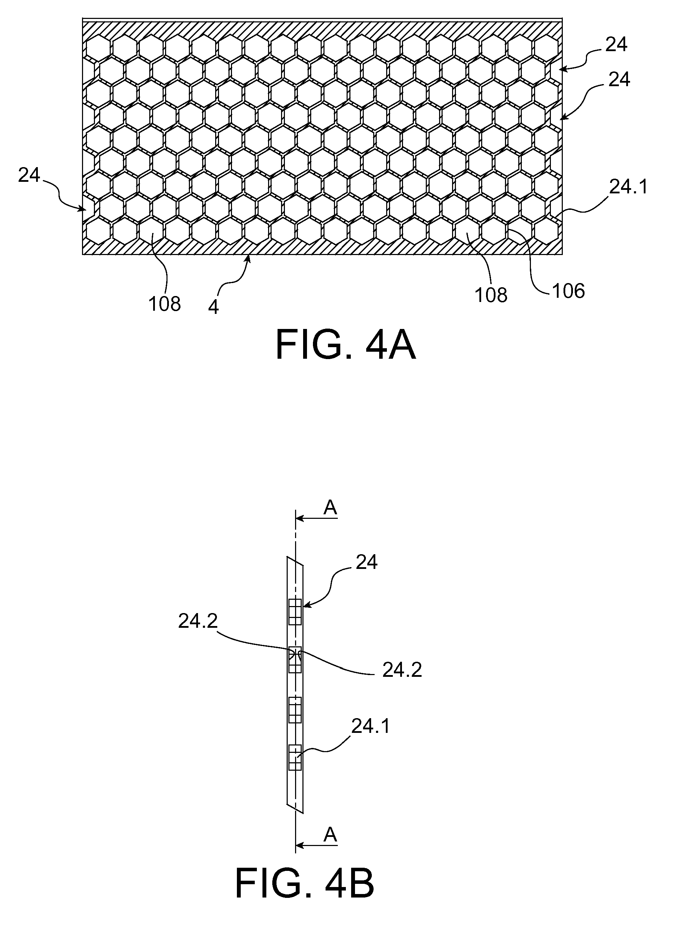

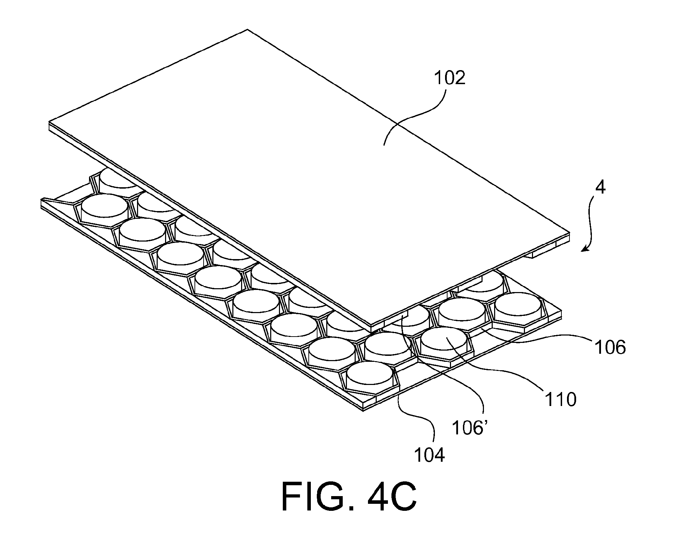

La plaque 4 représentée sur les figures 4A à 4C comporte une structure comprenant un élément composite sous forme de plaque avec une macrostructure définissant des alvéoles individuelles pour chaque pastille. L'élément plaque composite macro structuré 4 est construit sur la base d'un panneau sandwich avec deux panneaux de gainage 102, 104 dont l'âme est un réseau 106 d'alvéoles 108 ordonnées en nid d'abeilles, disposées sensiblement orthogonalement aux faces des plaques 102, 104.

Chaque alvéole 108, délimitée par les parois 106 et fermée à ses extrémités par les faces 102, 104 de l'élément plaque 4, constitue une cellule élémentaire pour assurer le transfert thermique entre le combustible 110 qui y sera localisé et les faces des panneaux de gainage 102, 104 refroidis par le caloporteur gazeux, pour ménager le volume d'expansion des gaz de fission, et pour favoriser une interaction mécanique combustible 110/gaine 102, 104 à faible niveau de contrainte dans les structures de la cellule.

Ces plaques offrent un faible élancement et une importante raideur en flexion, ce qui permet de limiter les arcures à quelques dixièmes de millimètre. Ces faibles arcures évitent donc une modification significative de l'épaisseur des canaux de circulation de caloporteurs délimités par les faces des plaques.

De préférence, l'ensemble de la structure de l'élément 4, c'est-à-dire le réseau 106 et chacune des panneaux 102, 104 de gainage, est fabriqué dans le même matériau réfractaire, qui peut être un métal, ou une céramique, la céramique pouvant être monolithique ou comporter des fibres elles-mêmes céramiques.

A titre d'exemple, les plaques peuvent avoir les dimensions suivantes en mm :

$$257,3 \times 128,9 \times 8,4.$$

Les plaques décrites dans le document FR 2 889 765 ont été modifiées de manière à être particulièrement adaptées à un maintien dans le dispositif selon l'invention. En particulier, les évidements 24 recevant les dents 22 sont formés par de demi-alvéoles hexagonales, les alvéoles recevant une pastille. Ces demi-alvéoles forment un trapèze dont la plus grande base est confondue avec le bord axial inférieur ou supérieur de la plaque.

En outre, les bords latéraux de la plaque sont pleins et forment une surface sensiblement lisse par rapport à ceux des plaques du document FR 2 889 765. Cette structure lisse des bords latéraux permet :

- de combler le volume mort constitué par les sous-canaux triangulaires situés en bord de plaques,
- de limiter l'hétérogénéité des profils de température des plaques voisines,
- d'éviter les pertes de charges singulières provoquées par le profil des alvéoles incomplètes en bord de plaque.

En outre, il est également prévu de supprimer la rangée d'alvéoles internes pour les trois plaques centrales afin de dégager l'espace nécessaire au passage du tirant central. Il est à noter que cette suppression ne réduit la fraction volumique de combustible que d'environ 0,3 %.

Il est également bien entendu que la présente invention n'est pas limitée à l'assemblage de plaques telles que celles décrites ci-dessus mais tout autre type de plaque pourrait convenir, par exemple une plaque dans laquelle le combustible nucléaire se trouve non plus sous forme de pastille, mais sous forme d'une dispersion de particules dans une matrice, ou une plaque dans laquelle le combustible offre une disposition lamellaire.

Le faisceau fissile est ensuite inséré dans un boîtier 34 formé par un tube à section hexagonale, l'insertion du faisceau dans le boîtier étant guidée par les plaquettes 28 et 32.

Selon l'invention, le faisceau fissile est formé par un empilement de paniers, plus particulièrement un empilement de plaques, il y a donc une segmentation axiale du faisceau fissile en groupes unitaires compacts de plaques. Cette segmentation permet d'accommoder les arcures de boîtier grâce au fléchissement des paniers 2 les uns par rapport aux autres. Par ailleurs, le boîtier 34 est en contact avec le faisceau fissile uniquement au niveau des plaquettes. Il est à noter que le faisceau fissile ne contribue pas à la rigidité mécanique du boîtier, dans la mesure où le fléchissement relatif des dispositifs de maintien permet d'accommoder l'arcure du boîtier.

En outre, cette segmentation permet de répartir les arcures à l'échelle de chaque plaque, donc d'avoir de petites arcures locales au lieu d'une grande arcure globale qui serait inacceptable notamment vis à vis des critères de thermique. En effet, en cas de rétrécissement significatif d'un canal aéraulique, on ne pourrait obtenir un bon refroidissement d'une plaque. Et dans le cas contraire, en cas d'élargissement significatif d'un canal aéraulique, on pourrait créer un volume mort de caloporteur, dont une partie du gaz serait inutilisée.

Par ailleurs cette segmentation axiale rend le montage et le démontage du faisceau fissile plus aisés, ainsi que la fabrication des éléments combustibles et des structures de maintien.

Le panier a une importante souplesse intrinsèque, c'est à dire sans considérer la forte rigidification globale de l'ensemble du panier lorsque les plaques sont chargées. Cette rigidification est due à la rigidité intrinsèque des plaques, puisqu'elles ont un faible élancement, et de leur chargement en trois faisceaux inclinés de 60° les unes par rapport aux autres. Cette souplesse intrinsèque permet d'éviter l'application de contraintes d'interaction significatives aux plaques combustibles en cas de déformations différentielles plus importantes que celles attendues. Cette souplesse est liée à la structure de type « cage », très fine et aérée. La souplesse est plus particulièrement obtenue en flexion et en torsion pour l'ensemble du panier, lorsqu'il n'est pas chargé de plaques, par rapport à l'axe du faisceau, dans la mesure où la poutre centrale formant le seul élément axial axisymétrique cloisonné, est proche de la fibre neutre. Quant aux tirants externes, ceux-ci étant situés en périphérie, ils n'apportent pas une grande rigidité en flexion et surtout en torsion du fait de leur très grand élancement.

Cette souplesse est particulièrement obtenue en flexion pour le fond et le couvercle du fait de leur faible épaisseur.

Grâce à la présente invention, il est possible de réduire les volumes morts aérauliques, notamment ceux pouvant apparaître entre la face interne du boîtier et les plaques. En effet, la présente invention prévoit un maintien axial, qui permet de disposer les plaques 4 au plus près de la limite extérieure de la structure de maintien ; en l'occurrence les bords et les faces des plaques se situent dans le même plan que les faces des tirants externes 10, ceux-ci délimitant l'enveloppe externe des paniers. Il n'y donc qu'un très faible volume mort aéraulique périphérique et la perte de fraction volumique de combustible est également réduite de manière importante par rapport à un maintien transverse de type glissières latérales de l'état de la technique. En effet, on constate que le volume constitué par une liaison en périphérie externe du faisceau et ses jeux mécaniques fonctionnels est beaucoup plus important qu'une liaison disposée aux extrémités axiales des plaques.

Par ailleurs, la présente invention met en oeuvre un nombre limité de liaisons, ce qui permet de garantir le positionnement des plaques de manière isostatique.

Les jeux axiaux permettent une libre déformation des plaques sans risque de délogement, un jeu de 1,7 mm étant par exemple prévu pour une profondeur de maintien de 4,3 mm. La profondeur de maintien de 4,7 mm correspond à la distance de pénétration des dents dans les évidements 24 et le jeu 1,7 mm est le jeu entre le haut d'une dent et le fond de l'évidement 24.

En outre, le positionnement selon la direction radiale, i.e. selon la direction de la largeur des plaques est assuré uniquement selon la présente invention par une seule dent, ce positionnement étant de plus élastique.

Par ailleurs, la présente invention permet de ne pas devoir recourir à des entretoises entre les plaques adjacentes pour éviter une variation trop importante de l'ouverture des canaux aérauliques du fait de l'arcure des plaques combustibles. En effet, la segmentation du faisceau en superposant plusieurs étages de plaques sur la hauteur du faisceau fissile permet de limiter fortement l'élancement des plaques et donc d'obtenir de petites arcures locales de l'ordre de quelques dixièmes de millimètre à l'échelle de chaque plaque, qui n'ont pas de conséquence notable d'un point de vue thermoaéraulique.

Au contraire, dans le cas de plaques s'étendant sur toute la hauteur du faisceau, l'arcure globale serait inacceptable, puisqu'elle empêcherait le bon refroidissement d'une plaque en cas de fermeture significative d'un canal aéraulique, et provoquerait l'apparition de volumes morts en cas d'ouverture significative d'un canal aéraulique.

Les plaques décrites en relation avec la présente invention sont particulièrement adaptées à la segmentation du faisceau du fait de leur faible élancement.

Par ailleurs, selon l'invention il y a une dissociation entre les structures assurant le maintien des éléments combustibles, i.e. les paniers et les structures assurant l'architecture mécanique du coeur.

En effet, les seuls contacts entre le boîtier et le faisceau fissile ont lieu au niveau du socle du faisceau fissile assurant le support des paniers et au niveau des plaquettes 28 disposées à la jonction entre les paniers et formant des entretoises. Ces plaquettes forment des points de contact privilégiés du faisceau fissile avec le boîtier hexagonal, au lieu d'avoir un contact direct entre les plaques et le boîtier, puisque le bord des plaques se situe dans le même plan périphérique que les tirants externes du panier, i.e. en retrait des faces extérieures des plaquettes.

Un jeu transverse est défini entre le boîtier et les plaquettes situées en périphérie extérieure de chaque panier. Ce jeu transverse permet une accommodation des déformations différentielles pendant toute l'irradiation ainsi que le montage du faisceau fissile dans le boîtier. Ce jeu transverse est de plus limité du fait de la segmentation axiale du faisceau fissile. Cette segmentation, comme nous l'avons précédemment expliquée, permet notamment de réduire le jeu transverse requis pour découpler mécaniquement le faisceau fissile du boîtier.

De manière générale, il a été constaté que dans le cas de réacteur à neutrons rapides, les tubes hexagonaux d'un réacteur rapide peuvent présenter une arcure hors réseau maximale de l'ordre du pourcent dans la zone de gonflement différentiel maximal située entre le plan de flux maximal et le haut du faisceau, ce qui correspond à une flèche d'environ 10 mm par mètre. On peut donc s'attendre à avoir une arcure maximale hors réseau des boîtiers d'assemblages GFR de l'ordre d'environ 12 mm sur une demi-hauteur du faisceau fissile en prenant une hauteur du faisceau fissile de 2349 mm. Le plan de flux maximal correspond à la section axiale du coeur où le flux neutronique est maximal, i.e. il correspond environ au plan médian coeur ; l'arcure hors réseau est l'arcure que présente l'assemblage quand il est retiré du coeur, donc quand il n'est plus soumis aux contraintes de réseau des assemblages voisins.

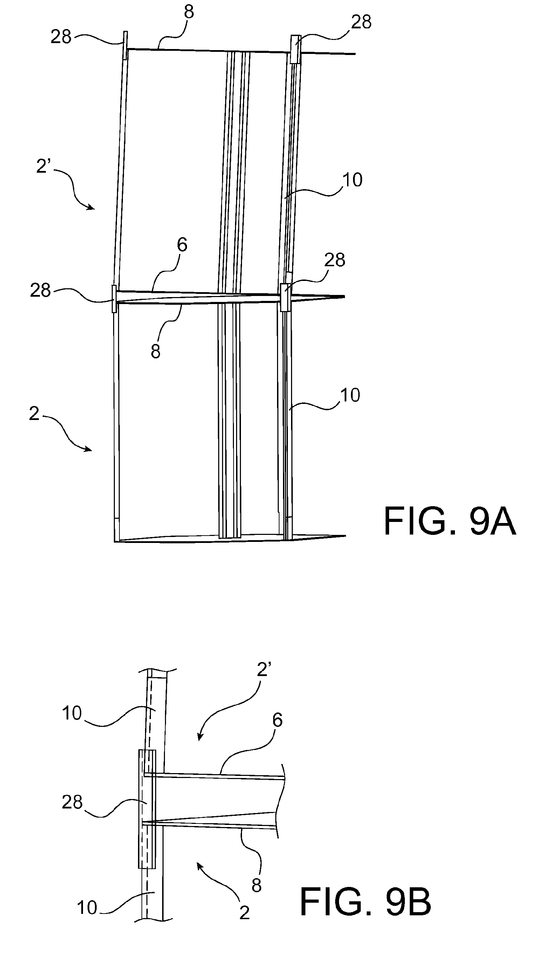

Dans le faisceau fissile de la présente invention, il y a apparition d'un fléchissement relatif des paniers les uns par rapport aux autres permettant d'accommoder l'arcure du boîtier comme représenté sur la figure 9. Par ailleurs, un jeu mécanique fonctionnel entre chaque panier et le boîtier est prévu afin de pouvoir accommoder l'arcure du boîtier à l'échelle d'un panier : ce jeu diamétral est alors de l'ordre de 2,5 mm dans la mesure où un panier mesure 250 mm de haut.

A titre de comparaison, Si le faisceau fissile n'était constitué que d'un seul panier de plaques, autrement dit si le panier de plaques faisait toute la hauteur du faisceau fissile, soit 2349 mm, il faudrait donc garantir un jeu mécanique fonctionnel diamétral d'au moins 12 mm entre le faisceau fissile et le boîtier pour pouvoir accommoder l'arcure du boîtier. En effet, il est souhaitable que le découplage mécanique soit garanti non seulement en fonctionnement dans le réseau, mais également pendant les phases de manutention de l'assemblage hors réseau. Un tel jeu est inacceptable, tant du point de vue neutronique, puisqu'il y aurait diminution de la fraction volumique de combustible, que du point de vue thermoaéraulique, puisqu'il y aurait apparition de volumes morts entre les plaques et le boîtier.

La hauteur de la saillie axiale des plaquettes 28 et le jeu diamétral défini entre l'entreplat interne des plaquettes et le socle du panier supérieur définissent la capacité de fléchissement relatif entre deux paniers. Par exemple, si on considère un jeu diamétral minimal en fonctionnement de deux dixièmes de millimètres, ce qui correspond à une cote fonctionnelle initiale de cinq dixièmes diminuée de trois dixièmes en se plaçant dans les conditions les plus pénalisantes en terme de tolérances de fabrication et de déformations différentielles entre paniers, et une saillie axiale de 12 mm, le fléchissement total possible de l'empilement de neuf paniers vaut environ 15 mm, ce qui permet effectivement d'accommoder les 12 mm d'arcure maximale du boîtier. Par ailleurs, un jeu diamétral de cinq dixièmes permet un décalage angulaire entre deux paniers se traduisant par un recouvrement maximal des canaux aérauliques de l'ordre de deux à trois dixièmes de millimètres en périphérie de faisceau. Ce recouvrement ne génère pas de perte de charge rédhibitoire à l'échelle du faisceau.

Un jeu axial est ménagé entre l'empilement de paniers et la butée supérieure du tirant central du faisceau fissile, celui-ci permet d'accommoder les déformations différentielles entre l'empilement de paniers et le tirant, mais également permet le fléchissement maximal du faisceau fissile, ce jeu axial est d'environ 10 mm. Il est alors prévu que la saillie axiale des plaquettes par rapport au couvercle du panier soit avantageusement supérieure à ce jeu axial, évitant toute possibilité de déboîtement des paniers au sein du faisceau fissile.

Comme nous l'avons expliqué précédemment, la saillie radiale formée par les plaquettes par rapport aux tirants externes du panier permet d'assurer l'épaisseur du canal aéraulique périphérique nécessaire au refroidissement des faces externes des plaques situées en périphérie du faisceau fissile.

De manière également avantageuse, on prévoit un jeu radial important entre le tirant central du faisceau fissile et l'alésage ménagé dans les poutres centrales des paniers. Ce jeu permet de retarder au maximum le contact du tirant avec les paniers lorsqu'ils sont en condition de fléchissement, afin que le tirant ne confère pas de rigidité en flexion au faisceau fissile, confirmant le découplage mécanique du faisceau fissile et du boîtier.

Il est à noter toutefois que, si un tel contact apparaissait, la contribution qu'il apporterait alors à la rigidité en flexion du faisceau fissile serait faible, du fait de son grand élancement et de sa position sur la fibre neutre du faisceau fissile. Comme cela a déjà été décrit, la poutre centrale permet d'éviter que l'espace dégagé au sein du panier pour assurer le passage du tirant central ne constitue un volume mort important pour le caloporteur.

Des codes tels que FLUENT, Star-CD et Trio_U ont été utilisés pour réaliser le dimensionnement des canaux aérauliques assurant le refroidissement des plaques et vérifier que les jeux mécaniques fonctionnels radiaux ménagés globalement entre les plaques combustibles et le boîtier hexagonal, afin d'assurer le découplage mécanique des plaques et des structures du coeur, ne conduisaient pas à des volumes morts rédhibitoires ainsi qu'à un sur-refroidissement inacceptable des extrémités des plaques combustibles. En effet, un fort gradient thermique non linéaire dans la largeur des plaques combustibles pourrait conduire à leur endommagement. Le code CATHARE a permis par ailleurs de vérifier que les pertes de charges générées au sein du faisceau fissile étaient compatibles avec la capacité d'évacuation de la puissance résiduelle lors de transitoires accidentels.

D'un point de vue neutronique, le code ERANOS a permis de vérifier que les principaux critères de bon fonctionnement neutronique du coeur sont respectés, notamment le gain de régénération, les coefficients de réactivité en situation nominale et accidentelle (doppler et dépressurisation hélium), inventaire matière, ...

Le dispositif de maintien selon l'invention présente l'avantage d'assurer une bonne capacité d'alimentation des canaux aérauliques en fluide caloporteur dans toutes les situations de fonctionnement. En effet, la structure des paniers est telle qu'elle ne cloisonne pas les canaux aérauliques au sein du boîtier mais permet au contraire une ouverture systématique de ces canaux, du fait de la structure extrêmement « aérée » des paniers et de tous les jeux radiaux et axiaux ménagés entre les plaques combustibles et les structures. Ceci permet d'assurer le refroidissement des plaques combustibles pour toute situation de fonctionnement. En effet, en cas de bouchage accidentel d'un canal aéraulique, ce décloisonnement permettra d'assurer une ré-alimentation du canal bouché en fluide caloporteur grâce aux distances de recirculation ménagées entre les différents canaux.

Par ailleurs, une fraction volumique de combustible dans le coeur égale à 23 % peut être obtenue grâce à l'invention, nous rappelons qu'une fraction volumique élevée de combustible, au minimum de l'ordre de 20 % est requise. Ceci est possible grâce aux volumes réduits des structures de l'assemblage, de l'encombrement limité des moyens axiaux mis en oeuvre pour le maintien des éléments combustibles, par l'optimisation de la répartition des jeux mécaniques fonctionnels dans tout le faisceau fissile.

On peut donner à titre d'exemples la répartition des fractions volumiques suivantes parmi les différents composants de coeur :

- 1,2 % pour le volume entre deux assemblages,
- 30 % pour les canaux aérauliques (nécessaires au refroidissement direct des plaques et dont l'épaisseur minimale est également fortement contrainte par la perte de charge coeur),
- 37,3 % pour les plaques combustibles (sans tenir compte du combustible, c'est à dire : ensemble du gainage, vases d'expansion et demi-alvéoles incomplètes),

- 8,5 % pour les structures du coeur, l'encombrement des systèmes de maintien et les jeux mécaniques fonctionnels ; ces 8,5 % sont répartis de la manière suivante : 3,5 % de structure (dont 1,0 % pour les paniers et le tirant du faisceau fissile et 2,5 % pour le boîtier hexagonal), 1 % de jeux axiaux en tête de panier, et 4,0 % pour l'encombrement des systèmes de maintien et les jeux mécaniques (jeux essentiellement constitués par la distance radiale entre les plaques et les parois internes du boîtier hexagonal).

On notera que la minimisation de la fraction volumique de structure répond par ailleurs à un autre critère neutronique qui est de rendre les structures les plus « transparentes » possible aux neutrons afin de ne pas perturber le fonctionnement neutronique du coeur.

Par ailleurs, la présente invention permet de réaliser des unités compactes d'éléments combustibles pour faciliter les opérations de toutes les étapes du cycle du combustible.

Ils constituent des unités de conditionnement privilégiés des plaques combustibles et peuvent permettre d'optimiser l'encombrement et le dimensionnement de nombreux systèmes du cycle du combustible, par exemple les bras de manutention, les sas et couloirs de manutention, les cellules blindées pour l'assemblage des éléments combustibles, les cellules de transport, de stockage et de retraitement, .... La taille de tous ces systèmes peut alors être réduite du fait de la compacité des unités de conditionnement des plaques.

Par ailleurs, le montage du faisceau fissile est facilité, ainsi que la fabrication des éléments combustibles et des structures de maintien.

Par ailleurs, la démontabilité des structures permet d'optimiser leur durée de vie et ainsi de minimiser la quantité de déchets activés, ce qui permet d'améliorer le retraitement. La dissociation du faisceau fissile et du boîtier hexagonal, la segmentation du faisceau fissile en plusieurs unités distinctes et enfin l'absence de toute fixation des éléments combustibles à leur structure de maintien permet de favoriser au maximum la démontabilité des structures de la partie fissile du coeur.

On notera par ailleurs que la segmentation du faisceau fissile en unités distinctes et démontables donne la possibilité d'optimiser la gestion du combustible dans le coeur, en modifiant la répartition des unités dans le faisceau fissile à chaque nouveau cycle.

Nous allons maintenant donner un exemple de réalisation d'un faisceau fissile et du coeur correspondant selon la présente invention.

Le coeur fissile présente une hauteur de 2349 mm et un diamètre de 3789 mm.

Le boîtier hexagonal a un entreplat interne de 223 mm.

Les paniers qui constituent les structures porteuses de groupes de plaques combustibles font environ 257 mm de haut pour 220,5 mm de large, pour une masse d'environ 47 kg quand ils sont chargés de 27 plaques.

Les structures du panier ont des épaisseurs relativement faibles de quelques millimètres.

On prévoit donc neuf paniers par faisceau fissile et 27 plaques par panier.

En fonctionnement normal, ce faisceau fissile a une puissance thermique moyenne de 9,8 MW (le coeur complet comprenant 246 assemblages fissiles ayant une puissance totale de 2400 MW thermique).

On utilise comme gaz caloporteur de l'hélium.

La température du caloporteur à l'entrée des assemblages (et donc environ à l'entrée du faisceau fissile) est fixée à environ 400°C. La température moyenne du caloporteur en sortie des assemblages (et donc sensiblement en sortie du faisceau fissile) est alors d'environ 900°C.

La température maximale de l'enveloppe des plaques de combustible nucléaire est d'environ 985°C.

La température maximale du combustible est d'environ 1375°C.

On mesure une perte de charge coeur de 1,34 bar, dont 1,10 bar dans le faisceau fissile.

Les matériaux utilisés peuvent être :

- pour le combustible, du (U,Pu)C,
- pour la structure de la plaque combustible (gainage du combustible), du carbure de silicium renforcé avec des fibres de carbures de silicium,
- pour les structures du faisceau fissile exposées à des températures élevées ne permettant pas l'utilisation des matériaux métalliques classiquement utilisés dans les réacteurs à neutrons rapides, les paniers et les tirants sont par exemple fabriqués en carbure de silicium renforcé avec des fibres de carbures de silicium dans le cas du faisceau défini ci-dessus ou bien en alliage métallique réfractaire.

Pour un alliage métallique réfractaire, nous allons maintenant décrire un exemple d'un procédé de fabrication de structures du faisceau fissile illustrant la simplification de réalisation d'un faisceau fissile grâce à la présente invention.

Le procédé de fabrication d'un panier selon la présente invention comporte les étapes :

- réalisation du fond et du couvercle des paniers par usinage dans la masse,
- réalisation des peignes par pliage et/ou emboutissage,
- réalisation du manchon central par étirage,
- réalisation des tirants externes par usinage,
- fixation des peignes sur le fond et le couvercle par sertissage, soudage ou brasage,
- fixation des plaquettes sur les tirants externes par soudage ou brasage, ou usinage des plaquettes dans la masse des tirants,
- fixation des tirants sur le fond et le couvercle par soudage ou brasage, renforcée éventuellement par une liaison mécanique supplémentaire assurée par l'encastrement d'un pion de centrage,

- fixation du manchon central sur le socle et le couvercle par encastrement, soudage ou brasage,
- montage des plaques grâce à des dispositifs dédiés,
- fixation du couvercle sur les tirants par soudage et brasage, renforcée éventuellement par une liaison mécanique supplémentaire assurée par l'encastrement d'un pion de centrage.

La présente invention s'applique principalement aux réacteurs rapides à haute température et à gaz caloporteurs, mais il est bien entendu qu'elle peut s'appliquer à des réacteurs dont les conditions de fonctionnement sont moins difficiles.

Par exemple, elle s'applique à des réacteurs utilisant des caloporteurs présentant de meilleurs capacités d'échange conductif que le gaz, par exemple le sodium, et fonctionnant à des températures de caloporteur plus basses. En outre la présente invention s'applique au maintien de tout type de plaque comme nous l'avons déjà mentionnée, par exemple à des plaques telles que celles décrites dans le document FR 2 889 765 ou à des plaques dans lesquelles le combustible nucléaire est dispersé dans une matrice.

## Revendications

1. Dispositif de maintien de plaques (4) de combustible nucléaire d'axe longitudinal (x), les plaques formant un hexaèdre dont les angles sont avantageusement proches de 90°, par exemple compris entre [85°, 105°], les plaques présentant deux faces de plus grande surface dont la longueur est destinée à s'étendre parallèlement à l'axe longitudinal du dispositif de maintien, ledit dispositif de maintien comportant un fond (6) formant une extrémité longitudinale inférieure du dispositif de maintien et un couvercle (8) formant une extrémité longitudinale supérieure du dispositif de maintien, le fond (6) et le couvercle (8) étant reliés l'un à l'autre par un moyen de liaison central et des moyens de liaison périphériques, une pluralité de moyens de maintien supérieurs (18) des plaques (4) fixés au couvercle (8), une pluralité des moyens de maintien inférieurs (16) des plaques (4) fixés au fond (6), et chaque moyen de maintier supérieur (18) assurant un maintien élastique de l'extrémité longitudinale supérieure d'une plaque (4) dans la direction de la largeur (R) de la plaque (4) et permettant une libre déformation de l'extrémité longitudinale supérieure de la plaque (4) dans la direction de l'épaisseur (T) de la plaque, et chaque moyen de maintien inférieur (16) assurant un maintien élastique de l'extrémité longitudinale inférieure d'une plaque (4) dans la direction de la largeur de la plaque (R) et permettant un mouvement de l'extrémité longitudinale inférieure de la plaque (4) dans la direction de l'épaisseur (T) de la plaque (4).

2. Dispositif de maintien selon la revendication 1, dans lequel chaque moyen de maintien supérieur (18) comporte un peigne supérieur muni d'une pluralité de dents alignées (22, 22'), en saillie longitudinalement en direction du fond (6), une (22') parmi lesdites dents étant apte à exercer un effort élastique selon la direction de la largeur (R) de la plaque (4), et chaque moyen de maintien inférieur (16) comporte un peigne inférieur muni d'une pluralité de dents alignées (22, 22'), en saillie longitudinalement en direction du couvercle (8), une (22') parmi lesdites dents étant apte à exercer un effort élastique selon la direction de la largeur (R) de la plaque (4).

3. Dispositif de maintien selon la revendication 2, dans lequel les dents (22') aptes à exercer un effort élastique selon la direction de la largeur (R) de la plaque (4) sont disposées à une extrémité axiale des peignes inférieur (16) et supérieur (18) disposée vers une partie centrale du fond (6) et du couvercle (8) respectivement.

4. Dispositif selon la revendication 2 ou 3, dans lequel les dents (22') aptes à exercer un effort élastique selon la direction de la largeur (R) de la plaque (4) comportent au moins une languette (26) recourbée déformable élastiquement et d'un seul tenant avec la dent (22').

5. Dispositif de maintien selon l'une des revendications 1 à 4, ayant une section transversale ayant la forme d'un hexagone régulier, les moyens de maintien supérieur (18) et inférieur (16) étant répartis en trois zones en forme de losange, un losange du fond (6) étant en vis-à-vis d'un losange du couvercle (8).

6. Dispositif de maintien selon la revendication 5, dans lequel les peignes inférieurs (16) d'une même zone sont disposés parallèles à deux côtés du losange et sont séparés d'une distance donnée, et tous les peignes supérieurs (18) d'une même zone sont disposés parallèles à deux côtés et sont séparés de ladite distance donnée.

7. Dispositif de maintien selon l'une des revendications 1 à 6, comportant trois tirants longitudinaux (10) fixés sur la périphérie du fond (6) et du couvercle (8), reliant le fond (6) et le couvercle (8).

8. Dispositif de maintien selon l'une des revendications 1 à 7, comportant une poutre centrale (12) interposée entre le fond (6) et le couvercle (8), ladite poutre (12) comportant un passage longitudinal traversant.

9. Dispositif de maintien selon l'une des revendications 1 à 8, comportant des moyens d'orientation (28) d'un dispositif de maintien supérieur dont un fond (6) est destiné à reposer sur le couvercle (8) de manière à aligner les plaques (4) disposées dans le dispositif de maintien avec celles disposées dans le dispositif de maintien supérieur.

10. Dispositif de maintien selon la revendication 9 et en combinaison avec la revendication 7, dans lequel ces moyens d'orientation (28) comportent des plaquettes fixées sur une périphérie du couvercle (8) et faisant saillie longitudinalement en éloignement du fond (6) de façon à délimiter un périmètre de forme hexagonale, avantageusement les plaquettes (28) scnt fixées sur les tirants longitudinaux (10).

11. Faisceau fissile comportant au moins un premier et un deuxième dispositif de maintien selon l'une quelconque des revendications précédentes, et des plaques (4) de combustibles nucléaires chargées dans lesdits premier et deuxième dispositifs de maintien, le deuxième dispositif de maintien étant empilé sur le premier dispositif de maintien, le fond (6) du deuxième dispositif de maintien reposant sur le couvercle (8) du premier dispositif de maintien.

12. Faisceau fissile selon la revendication 11 en combinaison avec la revendication 8, comportant un socle (30) sur lequel repose le fond (6) du premier dispositif de maintien et un tirant central (14) fixé dans une zone centrale du socle (30) et traversant longitudinalement les poutres centrales (12) et une butée supérieure fixée au tirant central.

13. Faisceau fissile selon la revendication précédente, comportant des moyens d'orientation (32) d'un dispositif de maintien inférieur dont le fond (6) repose sur le socle (30), ces moyens d'orientation (32) comportant des plaquettes fixées sur une périphérie du socle (30) et faisant saillie longitudinalement en direction du fond (6) de façon à délimiter un périmètre de forme hexagonale.

14. Faisceau fissile selon l'une des revendications 11 à 13 en combinaison avec la revendication 2, dans lequel les plaques (4) comportent des cavités axiales (24) au niveau de leurs extrémités longitudinales de forme correspondante à celle des dents (22, 22'), la profondeur des cavités (24) étant supérieure à la dimension longitudinale des dents (22, 22') et la largeur de cavité (24) étant supérieure à celle des dents (22, 22').

15. Faisceau fissile selon la revendications 11 à 14, dans lequel les plaques (4) comportent un premier panneau (104), un réseau (106) d'une pluralité de parois solidarisé au premier panneau (104) pour former des alvéoles séparées (108), et au moins une pastille de combustible nucléaire (110) s'étendant le long d'un axe (AA) entre deux faces opposées, dans lequel la pastille (110) est localisée dans une alvéole (108) avec un jeu radial (114) entre ses parois et la pastille (110), l'axe (AA) de la pastille (110) étant sensiblement parallèle aux parois de l'alvéole (108).

16. Faisceau fissile selon la revendication 15, dans lequel les plaques comportent un deuxième panneau plan (102) solidarisé au réseau (106), parallèle et opposée à au premier panneau (104), pour fermer les alvéoles (108).

17. Faisceau fissile selon la revendication 16, dans lequel les plaques comportent un deuxième panneau (102) comprenant un réseau (106') saillant complémentaire du réseau (106) du premier panneau (104) et solidarisé au réseau (106) de la première plaque (104) pour fermer les alvéoles (108).

18. Faisceau fissile selon l'une des revendications 15 à 17, dans lequel le réseau (106) est une structure en nid d'abeilles d'alvéoles (108) hexagonales.

19. Assemblage de coeur de combustible nucléaire pour réacteur nucléaire rapide haute température à caloporteur gaz comportant un faisceau fissile selon l'une des revendications 11 à 18 et un boîtier (34) d'axe longitudinal et de section hexagonale monté autour du faisceau fissile.

20. Assemblage de coeur selon la revendication 19, dans lequel un jeu est prévu entre le boîtier et le faisceau fissile, ce jeu étant plus faible au niveau des plaquettes (28) fixées en périphérie des dispositifs de maintien et des plaquettes (32) fixées en périphérie du socle.

**Patentansprüche**

1. Vorrichtung mit Längsachse (x) zum Festhalten von Kernbrennstoffplatten (4), wobei die Platten ein Sechseck bilden, dessen Winkel vorteilhafterweise nahe bei 90° sind, zum Beispiel enthalten sind zwischen [85° und 105°], und die Platten dabei zwei Seiten von größerer Fläche aufweisen, deren Länge dazu bestimmt ist, sich parallel zu der Längsachse der Festhaltevorrichtung zu erstrecken, wobei die genannte Festhaltevorrichtung einen Boden (6), der ein unteres longitudinales Ende der Festhaltevorrichtung bildet, und einen Deckel (8) umfasst, der ein oberes longitudinales Ende der Festhaltevorrichtung bildet, wobei der Boden (6) und der Deckel (8) miteinander verbunden sind durch eine zentrale Verbindungseinrichtung und periphere Verbindungseinrichtungen, eine Vielzahl von oberen Einrichtungen (18) zum Festhalten die Platten, der am Deckel befestigt sind, eine Vielzahl von unteren Einrichtungen (16) zum Festhalten die Platten, der am Boden (9) befestigt sind, und jede obere Festhalteeinrichtung (18) für das obere longitudinale Ende einer Platte (4) in der Richtung der Breite (R) der Platte (4) einen elastischen Halt gewährleistet und eine freie Verformung des oberen longitudinalen Endes der Platte (4) in der Richtung der Dicke (T) der Platte ermöglicht, und jede untere Festhalteeinrichtung (16) für das untere longitudinale Ende einer Platte (4) in der Richtung der Breite (R) der Platte (4) einen elastischen Halt gewährleistet und eine Bewegung des unteren longitudinalen Endes der Platte (4) in der Richtung der Dicke (T) der Platte (4) ermöglicht.

2. Festhaltevorrichtung nach Anspruch 1, bei der jede obere Halteeinrichtung (18) einen oberen Kamm mit einer Vielzahl von aneinandergereihten Zähnen (22, 22') umfasst, longitudinal vorstehend in Richtung des Bodens (6), wobei einer (22') unter den genannten Zähnen fähig ist, einen elastischen Druck in der Richtung der Breite (R) der Platte (4) auszuüben, und jede untere Halteeinrichtung (16) einen unteren Kamm mit einer Vielzahl von aneinandergereihten Zähnen (22, 22') umfasst, longitudinal vorstehend in Richtung des Deckels (8), wobei einer (22') unter den genannten Zähnen fähig ist, einen elastischen Druck in der Richtung der Breite (R) der Platte (4) auszuüben.

3. Festhaltevorrichtung nach Anspruch 2, bei der die Zähne (22'), die fähig sind, einen elastischen Druck in der Richtung der Breite (R) der Platte (4) auszuüben, an einem axialen Ende des unteren (16) und des oberen (18) Kammes angeordnet sind, auf bzw. gegen einen zentralen Teil des Bodens (6) beziehungsweise des Deckels (8) gerichtet.

4. Festhaltevorrichtung nach Anspruch 2 oder 3, bei der die Zähne (22'), die fähig sind, einen elastischen Druck in Richtung der Breite (R) der Platte (4) auszuüben, wenigstens eine gebogene Zunge (26) umfassen, die elastisch verformbar und aus einem Stück mit dem Zahn (22') ist.

5. Festhaltevorrichtung nach einem der Ansprüche 1 bis 4 mit einem Querschnitt mit der Form eines regelmäßigen Sechsecks, wobei die oberen (18) und unteren (16) Halteeinrichtungen auf drei rautenförmige Zonen verteilt sind, wobei eine Raute des Bodens (6) einer Raute des Deckels (8) gegenübersteht.

6. Festhaltevorrichtung nach Anspruch 5, bei der die unteren Kämme (16) einer selben Zone parallel zu zwei Seiten der Raute angeordnet sind und durch einen bestimmten Abstand getrennt sind, und alle oberen Kämme (18) einer selben Zone parallel zu zwei Seiten angeordnet sind und durch den genannten bestimmten Abstand getrennt sind.

7. Festhaltevorrichtung nach einem der Ansprüche 1 bis 6, drei longitudinale Zugstangen (10) umfassend, befestigt an der Peripherie bzw. dem Rand des Bodens (6) und des Deckels (8), die den Boden (6) und den Deckel (8) verbinden.

8. Festhaltevorrichtung nach einem der Ansprüche 1 bis 7, eine zentrale Stütze (12) umfassend, eingesetzt zwischen dem Boden (6) und dem Deckel (8), wobei die genannte Stütze (12) ein longitudinales Durchgangsloch umfasst.

9. Festhaltevorrichtung nach einem der Ansprüche 1 bis 8, mit Einrichtungen (28) zur Ausrichtung einer oberen Festhaltevorrichtung, deren Boden (6) dazu bestimmt ist, so auf dem Deckel (8) zu ruhen, dass die in der Festhaltevorrichtung angeordneten Platten (4) mit denjenigen fluchten, die in der oberen Festhaltevorrichtung angeordnet sind.

10. Festhaltevorrichtung nach Anspruch 9 und in Kombination mit Anspruch 7, bei der diese Ausrichteinrichtungen (28) Platten umfassen, die an einer Peripherie bzw. einem Rand des Deckels (8) befestigt sind und in Längsrichtung bei Abwesenheit des Bodens (6) so vorstehen, dass sie einen Umfang von sechseckiger Form begrenzen, wobei die Platten (28) vorteilhafterweise an den longitudinale Zugstangen (10) befestigt sind.

11. Brennstoffbündel, wenigstens eine erste und eine zweite Festhaltevorrichtung nach einem der vorhergehenden Ansprüche und Kernbrennstoffplatten (4) umfassend, eingesetzt in die genannten ersten und zweiten Festhaltevorrichtungen, wobei die zweite Festhaltevorrichtung auf der ersten Festhaltevorrichtung gestapelt ist, indem der Boden (6) der zweiten Festhaltevorrichtung auf dem Deckel (8) der ersten Festhaltevorrichtung ruht.

12. Brennstoffbündel nach Anspruch 11 in Kombination mit Anspruch 8, umfassend einen Sockel (30), auf dem der Boden (6) der ersten Festhaltevorrichtung ruht, und eine zentrale Zugstange (14), die in einer zentralen Zone des Sockels (30) befestigt ist und die zentralen Stützen (12) longitudinal durchquert, und einen an der zentralen Zugstange befestigten oberen Anschlag.

13. Brennstoffbündel nach dem vorhergehenden Anspruch, mit Ausrichteinrichtungen (32) einer unteren Festhaltevorrichtung, deren Boden (6) auf dem Sockel (30) ruht, wobei diese Ausrichteinrichtungen (32) Platten umfassen, die an einer Peripherie des Sockels (30) befestigt sind und longitudinal in Richtung des Bodens (6) vorstehen, so dass sie einen

**14.** Brennstoffbündel nach einem der Ansprüche 11 bis 13 in Kombination mit Anspruch 2, bei dem die Platten (4) axiale Hohlräume (24) in Höhe ihrer longitudinalen Enden umfassen, deren Form derjenigen der Zähne (22, 22') entspricht, wobei die Tiefe der Hohlräume (24) größer ist als die longitudinale Abmessung der Zähne (22, 22') und die Breite des Hohlraums bzw. der Hohlräume (24) größer ist als diejenige der Zähne (22, 22').

**15.** Spalt- bzw. Brennstoffbündel nach Anspruch 11 bis 14, bei dem die Platten (4) eine erste Tafel (104) mit einem Gitter (106) aus einer Vielzahl von Wänden zur Bildung von getrennten Zellen (108), fest verbunden bzw. aus einem Stück mit der ersten Tafel (104), und wenigstens eine Kernbrennstofftablette (110) umfassen, längs einer Achse (AA) zwischen zwei entgegengesetzten Seiten, wobei die Tablette (110) in einer Zelle (108) lokalisiert ist, mit einem Radialspiel (114) zwischen den Wänden und der Tablette (110), und die Achse (AA) der Tablette 110 dabei im Wesentlichen zu den Wänden der Zelle (108) parallel ist.

**16.** Brennstoffbündel nach Anspruch 15, bei dem die Platten eine zweite, plane Tafel (102) zum Verschließen der Zellen (108) umfassen, die mit dem Gitter (106) fest verbunden ist, parallel und entgegengesetzt zur ersten Tafel (104).

**17.** Brennstoffbündel nach Anspruch 16, bei dem die Platten eine zweite Tafel (102) mit einem Gitter (106') umfassen, das komplementär zum Gitter (106) der ersten Tafel (104) vorsteht und mit dem Gitter (106) der ersten Tafel (104) fest verbunden ist, um die Zellen (108) zu verschließen.

**18.** Brennstoffbündel nach einem der Ansprüche 15 bis 17, bei dem das Gitter (106) eine Wabenstruktur mit hexagonalen Zellen (108) ist.

**19.** Kernzonen-Brennstoffanordnung für schnellen Kernreaktor mit Hochtemperaturgaskühlmittel, umfassend Brennstoffbündel nach einem der Ansprüche 11 bis 18 und ein um das Spaltstoffbündel herum montiertes Gehäuse (34) mit Längsachse und mit hexagonalem Querschnitt.

**20.** Kernzonen-Brennstoffanordnung nach Anspruch 19, bei der zwischen dem Gehäuse und dem Spaltstoffbündel ein Spiel vorgesehen ist, wobei dieses Spiel in Höhe der am Rand der Festhaltevorrichtungen befestigten Platten (28) und der am Rand des Sockels befestigten Platten (32) kleiner ist.

**Claims**

**1.** A device for supporting nuclear fuel plates (4) with a longitudinal axis (X), the plates forming an hexahedra, the angles of which are advantageously close to 90°, for example the angles are comprised between [85°, 105°], the plates having faces of larger surface, the length of which being intended to extend in parallel manner to the longitudinal axis of the supporting device, the device comprising a bottom (6) forming a lower longitudinal end of the supporting device and a lid (8) forming an upper longitudinal end of the supporting device, the bottom (6) and the lid (8) being connected to each other through a central connecting means and peripheral connecting means, a plurality of upper means (18) for supporting the plates (4) attached to the lid (8), a plurality of lower means (16) for supporting the plates (4) attached to the bottom (6), each upper supporting means (18) ensuring elastic support of an upper longitudinal end of a plate (4) in the direction of the width (R) of the plate and allowing free deformation of the upper longitudinal end of the plate (4) in the direction of the thickness (T) of the plate, and each lower supporting means (16) ensuring elastic support of a lower longitudinal end of a plate (4) in the direction of the width (R) of the plate and allowing a movement of the lower longitudinal end of the plate (4) in the direction of the thickness (T) of the plate (4).

**2.** The supporting device according to claim 1, wherein each upper supporting means (18) includes an upper comb provided with a plurality of aligned teeth (22, 22'), protruding longitudinally towards the bottom (6), one (22') of said teeth being capable of exerting an elastic force along the direction of the width (R) of the plate (4) and each lower supporting means (16) includes a lower comb provided with a plurality of aligned teeth (22, 22'), protruding longitudinally towards the lid (8), one (22') of said teeth being capable of exerting an elastic force along the direction of the width (R) of the plate (4).

**3.** The supporting device according to claim 2, wherein the teeth (22') capable of exerting an elastic force along the direction of the width (R) of the plate (4) are positioned at an axial end of the lower (16) and upper (18) combs positioned towards a central portion of the bottom (6) and of the lid (8) respectively.

**4.** The supporting device according to claim 2 or 3, wherein the teeth (22') capable of exerting an elastic force along the direction of the width (R) of the plate (4) include at least one elastically deformable curved tab (26) of a single piece with the tooth (22').

**5.** The supporting device according to any of claims 1 to 4, having a cross-section having the shape of a regular hexagon, the upper (18) and lower (16) supporting means being distributed in three rhombus-shaped areas, a rhombus of the bottom (6) facing a rhombus of the lid (8).

6. The supporting device according to claim 5, wherein the lower combs (16) of a same area are positioned parallel to two sides of the rhombus and are separated by a given distance, and all the upper combs (18) of a same area are positioned parallel to two sides and are separated by said given distance.

7. The supporting device according to any of claims 1 to 6, including three longitudinal tie rods (10) attached on the periphery of the bottom (6) and of the lid (8), connecting the bottom (6) and the lid (8).

8. The supporting device according to any of claims 1 to 7, including a central beam (12) interposed between the bottom (6) and the lid (8), said beam (12) including a longitudinal through-passage.

9. The supporting device according to any of claims 1 to 8, including means (28) for orienting an upper supporting device, a bottom (6) of which is intended to rest on the lid (8) so as to align the plates (4) positioned in the supporting device with those positioned in the upper supporting device.

10. The supporting device according to claim 9, wherein these orientation means (28) include small plates attached on a periphery of the lid (8) and protruding longitudinally away from the bottom (6), so as to delimit a perimeter with a hexagonal shape, the small plates (28) being advantageously attached onto the longitudinal tie rods (10).

11. A fissile bundle including at least one first and second supporting device according to any of the preceding claims, and plates (4) of nuclear fuels, loaded in said first and second supporting devices, the second supporting device being stacked on the first supporting device, the bottom (6) of the second supporting device resting on the lid (8) of the first supporting device.

12. The fissile bundle according to claim 11 combined with claim 8, including a base (30) on which rests the bottom (6) of the first supporting device and a central tie rod (14) attached in a central area of the base (30) and longitudinally passing through the central beams (12) and an upper abutment attached to the central tie rod.

13. The fissile bundle according to the preceding claim, includes means (32) for orienting a lower supporting device, the bottom (6) of which rests on the base (30), these orientation means (32) including small plates attached on a periphery of the base (30) and protruding longitudinally towards the bottom (6) so as to delimit a perimeter of hexagonal shape.

14. The fissile bundle according to any of claims 11 to 13 combined with claim 2, wherein the plates (4) include axial cavities (24) at their longitudinal ends with a shape matching that of the teethes (22, 22'), the depth of the cavities (24) being larger than the longitudinal dimension of the teeth (22, 22') and the cavity width (24) being larger than that of the teeth (22, 22').

15. The fissile bundle according to claims 11 to 14, wherein les plates (4) include a first panel (104), a grid (106) of a plurality of walls interdependently attached to the first panel (104) in order to form separate cells (108), and at least one nuclear fuel pellet (110) extending along an axis (AA) between two opposite faces, wherein the pellet (110) is localized in a cell (108) with radial play (114) between its wall and the pellet (110), the axis (AA) of the pellet (110) being substantially parallel to the walls of the cell (108).

16. The fissile bundle according to claim 15, wherein the plates include a second planar panel (102) interdependently attached to the grid (106), parallel and opposite to the first panel (104), for closing the cells (108).

17. The fissile bundle according to claim 16, wherein the plates include a second panel (102) comprising a protruding grid (106') complementary to the grid (106) of the first panel (104) and interdependently attached to the grid (106) of the first plate (104) for closing the cells (108).

18. The fissile bundle according to any of claims 15 to 17, wherein the grid (106) is a honeycomb structure with hexagonal cells (108).

19. A nuclear fuel core assembly for a high temperature fast nuclear reactor with a heat transfer gas including a fissile bundle according to any of claims 11 to 18 and a casing (34) with a longitudinal axis and hexagonal section mounted around the fissile bundle.

20. The core assembly according to claim 19, wherein a play is provided between the casing and the fissile bundle, this play being smaller at the small plates (28) attached at the periphery of the supporting devices and small plates (32) attached at the periphery of the base.

FIG. 1

FIG. 2

# FIG. 3

**FIG. 4A**

**FIG. 4B**

FIG. 4C

FIG. 5

FIG. 6

FIG. 7

FIG. 8

FIG. 9A

FIG. 9B

**FIG. 10**

**EP 2 206 122 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2021844 A
- GB 1162641 A
- GB 907393 A
- GB 1519546 A
- FR 2889765